(19) Europäisches Patentamt / European Patent Office / Office européen des brevets

(11) **EP 3 703 174 B1**

(12) # FASCICULE DE BREVET EUROPEEN


(45) Date de publication et mention de la délivrance du brevet:
**28.06.2023 Bulletin 2023/26**

(21) Numéro de dépôt: **20159550.1**

(22) Date de dépôt: **26.02.2020**

(51) Classification Internationale des Brevets (IPC):
***H01M 10/0567*** *(2010.01)* ***H01M 10/0568*** *(2010.01)*
***H01M 10/0525*** *(2010.01)* *H01M 4/505 (2010.01)*
*H01M 4/525 (2010.01)* *H01M 4/58 (2010.01)*
*H01M 4/587 (2010.01)* *H01M 10/0569 (2010.01)*

(52) Classification Coopérative des Brevets (CPC):
**H01M 10/0567; H01M 10/0525; H01M 10/0568;**
H01M 4/505; H01M 4/525; H01M 4/5825;
H01M 4/587; H01M 10/0569; H01M 2300/0025;
Y02E 60/10


(54) **COMPOSITION D'ÉLECTROLYTE POUR ÉLÉMENT ÉLECTROCHIMIQUE LITHIUM-ION**

ELEKTROLYTZUSAMMENSETZUNG FÜR EIN ELEKTROCHEMISCHES LITHIUM-IONEN-ELEMENT

ELECTROLYTE COMPOSITION FOR LITHIUM-ION ELECTROCHEMICAL ELEMENT


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2019 FR 1902135**

(43) Date de publication de la demande:
**02.09.2020 Bulletin 2020/36**



(73) Titulaire: **SAFT**
**92300 Levallois-Perret (FR)**

(72) Inventeurs:
- **DEMEAUX, Julien**
  **33520 BRUGES (FR)**
- **OSWALD, Marlène**
  **33290 BLANQUEFORT (FR)**

(74) Mandataire: **Hirsch & Associés**
**154 Boulevard Haussmann**
**75008 Paris (FR)**



(56) Documents cités:
**CN-A- 106 099 171** **CN-A- 106 252 716**
**CN-A- 107 706 455** **CN-A- 108 054 431**
**CN-A- 108 539 267**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).


EP 3 703 174 B1

## Description

### Domaine technique

Le domaine technique de l'invention est celui des compositions d'électrolytes pour éléments électrochimiques rechargeables de type lithium-ion.

### Etat de la technique

Des éléments électrochimiques rechargeables de type lithium-ion sont connus de l'état de la technique. En raison de leur densité d'énergie massique et volumique élevées, ils constituent une source d'énergie électrique prometteuse. Ils comportent au moins une électrode positive, qui peut être un oxyde lithié de métal de transition, et au moins une électrode négative qui peut être à base de graphite. De tels éléments présentent néanmoins une durée de vie limitée lorsqu'ils sont utilisés à une température d'au moins 80°C. Leurs constituants se dégradent rapidement entrainant soit une mise en court-circuit de l'élément, soit une hausse de sa résistance interne. On observe par exemple qu'après environ 100 cycles de charge/décharge effectués à 85°C, la perte de capacité de tels éléments peut atteindre 20% de leur capacité initiale. De plus, on a aussi constaté que ces éléments présentaient une durée de vie limitée lorsqu'ils sont utilisés à une température inférieure à -10°C.

On cherche donc à mettre à disposition de nouveaux éléments électrochimiques de type lithium-ion présentant une durée de vie améliorée lorsqu'ils sont utilisés en cyclage à une température d'au moins 80°C, de préférence d'au moins 85°C ou à une température inférieure à -10°C. On considère que cet objectif est atteint lorsque ces éléments sont capables de fonctionner dans des conditions de cyclage en effectuant au moins 200 cycles avec une profondeur de décharge de 100% sans qu'une perte de capacité de plus de 20% de leur capacité initiale ne soit observée.

Le document CN 106099171 décrit un élément électrochimique lithium-ion dont l'électrolyte comprend de l'hexafluorophosphate de lithium $LiPF_6$, du bis(fluorosulfonyl)imidure de lithium LiFSI, du sulfate d'éthylène ESA, du carbonate de vinylène VC et du difluorophosphate de lithium $LiPO_2F_2$. Dans les exemples de ce document, le ratio entre la quantité de sulfate d'éthylène et la quantité de carbonate de vinylène est au moins égal à 1. Ce ratio élevé conduit à une dissolution rapide de la couche de passivation de l'électrode négative. La reconstitution d'une nouvelle couche de passivation pour remplacer celle dissoute a pour effet de consommer des ions lithium de l'électrolyte et donc d'entrainer une diminution de la quantité d'ions lithium dans l'électrolyte. Ceci conduit à une baisse des performances de l'élément en cyclage (fading), surtout à haute température.

Le document CN 108539267 décrit un électrolyte pour élément électrochimique lithium-ion. Les exemples de ce document décrivent un électrolyte comprenant $LiPF_6$, LiFSI, ESA, VC et $LiPO_2F_2$. Dans les exemples 1 et 5, le pourcentage massique de $LiPO_2F_2$ est de 1%, tandis que dans l'exemple 2, le ratio massique ESA/VC est supérieur ou égal à 1. Comme expliqué pour le document précédemment cité, ce ratio élevé conduit à une dissolution rapide de la couche de passivation de l'électrode négative qui entraine une diminution de la quantité d'ions lithium dans l'électrolyte, qui conduit finalement à une baisse des performances de l'élément en cyclage. D'autre part, l'exemple 5 décrit une composition d'électrolyte comprenant 1% de $LiPO_2F_2$. A une telle concentration, on approche de la limite de solubilité de ce composé. Lorsqu'on approche de la limite de solubilité, l'apparition de cristaux de $LiPO_2F_2$ limite la qualité de remplissage de l'élément par l'électrolyte. $LiPO_2F_2$ peut ne pas être uniformément réparti au sein de l'élément électrochimique après remplissage. Il peut en résulter une réduction des performances de l'élément.

Le document CN 108054431 décrit une composition d'électrolyte pour élément lithium-ion convenant pour un usage à basse et haute température. L'exemple 3 décrit une composition d'électrolyte comprenant 5 % m de LiFSI, 5 % m de $LiPF_6$, 1 % m de $LiPO_2F_2$, 0,5 % m de VC et 0,5 % m de ESA. Dans cet exemple, le ratio massique ESA/VC est égal à 1. Comme dans les deux documents précédemment cités, ce ratio élevé conduit à une baisse des performances de l'élément en cyclage.

Le document CN 107706455 décrit une composition d'électrolyte pour élément lithium-ion pouvant fonctionner à haute et basse température. Cete composition comprend $LiPF_6$, LiFSI, $LiPO_2F_2$, VC et ESA. Dans les exemples 1-3, 6, 7, 9-11 et les exemples comparatifs 1-3, 6, le pourcentage massique de ESA est de 0,5% et le pourcentage massique de VC est de 0,3%, soit un ratio ESA/VC de 1,67. Comme expliqué ci-avant, un ratio ESA/VC élevé conduit à une baisse des performances de l'élément en cyclage

Le document CN 106 252 716 A décrit une composition d'électrolyte pour élément lithium-ion, comprenant un sel de lithium choisi parmi $LiPF_6$, LiFSI et/ou LiDFOB, un solvant organique non-aqueux, un additif filmogène à faible impédance et un additif de protection contre les surcharges, dans lequel l'additif filmogène à faible impédance est choisi parmi $LiPO_2F_2$ et/ou ESA, tandis que l'additif de protection contre les surcharges est un composé aromatique, éventuellement fluoré, contenant un cycle benzène.

On cherche de nouveaux éléments électrochimiques capables de fonctionner en cyclage sur une large plage de température, c'est-à-dire pouvant fonctionner à une température pouvant descendre jusqu'à environ -20°C, et pouvant

atteindre au moins 80°C.

## Résumé de l'invention

L'invention a donc pour objet une composition d'électrolyte comprenant :

- au moins un sel de lithium tétrafluoré ou hexafluoré,
- le sel de bis(fluorosulfonyl)imidure de lithium LiFSI,
- du carbonate de vinylène,
- du sulfate d'éthylène,
- du difluorophosphate de lithium,
- au moins un solvant organique choisi dans le groupe consistant en les carbonates cycliques ou linéaires, les esters cycliques ou linéaires, les éthers cycliques ou linéaires et un mélange de ceux-ci,

le ratio de la masse de sulfate d'éthylène sur la masse de carbonate de vinylène avant addition au solvant étant strictement inférieur à 1,
le pourcentage massique de difluorophosphate de lithium représentant de 0,1 % à moins de 1% de la masse de l'ensemble constitué par ledit au moins un sel de lithium tétrafluoré ou hexafluoré, le sel de bis(fluorosulfonyl)imidure de lithium et ledit au moins un solvant organique.

Cet électrolyte peut être utilisé dans un élément électrochimique de type lithium-ion. Il permet à celui-ci de fonctionner à haute température, par exemple d'au moins 80°C. Il permet également à celui-ci de fonctionner à basse température, par exemple d'environ -20°C.

Selon un mode de réalisation, le sel de lithium tétrafluoré ou hexafluoré est choisi parmi l'hexafluorophosphate de lithium $LiPF_6$, l'hexafluoroarsénate de lithium $LiAsF_6$, l'hexafluoroantimonate de lithium $LiSbF_6$ et le tétrafluoroborate de lithium $LiBF_4$.

Selon un mode de réalisation, les ions lithium issus du sel de bis(fluorosulfonyl)imidure de lithium représentent au moins 30 % en mole de la quantité totale d'ions lithium présents dans la composition d'électrolyte.

Selon un mode de réalisation, les ions lithium issus du sel de lithium tétrafluoré ou hexafluoré représentent jusqu'à 70 % en mole de la quantité totale d'ions lithium présents dans la composition d'électrolyte.

Selon un mode de réalisation, le pourcentage massique de carbonate de vinylène représente de 0,1 à 5 %, de préférence de 0,5 à 2% de la masse de l'ensemble constitué par ledit au moins un sel de lithium tétrafluoré ou hexafluoré, le sel de bis(fluorosulfonyl)imidure de lithium et ledit au moins un solvant organique.

Selon un mode de réalisation, le pourcentage massique de sulfate d'éthylène représente de 0,1 à 5 %, de préférence de 0,5 à 1 % de la masse de l'ensemble constitué par ledit au moins un sel de lithium tétrafluoré ou hexafluoré, le sel de bis(fluorosulfonyl)imidure de lithium LiFSI et ledit au moins un solvant organique.

Selon l'invention, le pourcentage massique de difluorophosphate de lithium représente de 0,1 à moins de 1%, de préférence de 0,5 à moins de 1 % de la masse de l'ensemble constitué par ledit au moins un sel de lithium tétrafluoré ou hexafluoré, le sel de bis(fluorosulfonyl)imidure de lithium et ledit au moins un solvant organique.

Selon l'invention, le ratio de la masse de sulfate d'éthylène sur la masse de carbonate de vinylène est strictement inférieur à 1, de préférence inférieur ou égal à 0,5.

Selon un mode de réalisation, le ratio de la masse de difluorophosphate de lithium sur la somme des masses de carbonate de vinylène et de sulfate d'éthylène est strictement inférieur à 0,2.

Selon un mode de réalisation, le ratio de la masse de sulfate d'éthylène sur la masse de carbonate de vinylène est inférieur ou égal à 0,5 et le ratio de la masse de difluorophosphate de lithium sur la somme des masses de carbonate de vinylène et de sulfate d'éthylène est strictement inférieur à 0,2.

Selon un mode de réalisation, la composition ne comprendt pas de sulfo-lactone (sultone).

L'invention a également pour objet un élément électrochimique lithium-ion comprenant :

- au moins une électrode négative ;
- au moins une électrode positive ;
- la composition d'électrolyte telle que décrite ci-avant.

Selon un mode de réalisation, l'électrode négative comprend une matière active à base de carbone, de préférence du graphite.

Selon un mode de réalisation, la matière active positive comprend un ou plusieurs des composés i) à v) :

- composé **i)** de formule $Li_xMn_{1-y-z}M'_yM''_zPO_4$, où M' et M" sont différents l'un de l'autre et sont choisis dans le groupe

consistant en B, Mg, Al, Si, Ca, Ti, V, Cr, Fe, Co, Ni, Cu, Zn, Y, Zr, Nb et Mo, avec 0,8≤x≤1,2 ; 0≤y≤0,6 ; 0≤z≤0,2;

- composé **ii)** de formule $Li_xM_{2-x-y-z-w}M'_yM''_zM'''_wO_2$, où M, M', M" et M‴ sont choisis dans le groupe consistant en B, Mg, Al, Si, Ca, Ti, V, Cr, Mn, Fe, Co, Ni, Cu, Zn, Y, Zr, Nb et Mo, à la condition que M ou M' ou M" ou M‴ soit choisi parmi Mn, Co, Ni, or Fe ;
  M, M', M" et M‴ étant différents les uns des autres; avec 0,8≤x≤1,4 ; 0≤y≤0,5 ; 0≤z≤0,5; 0≤w≤0,2 et x+y+z+w<2,2 ;
- composé **iii)** de formule $Li_xMn_{2-y-z}M'_yM''_zO_4$, où M' et M" sont choisis dans le groupe consistant en B, Mg, Al, Si, Ca, Ti, V, Cr, Fe, Co, Ni, Cu, Zn, Y, Zr, Nb et Mo;
  M' et M" étant différents l'un de l'autre, et 1≤x≤1,4 ; 0≤y≤0,6 ; 0≤z≤0,2 ;
- composé **iv)** de formule $Li_xFe_{1-y}M_yPO_4$, où M est choisi dans le groupe consistant en B, Mg, Al, Si, Ca, Ti, V, Cr, Mn, Co, Ni, Cu, Zn, Y, Zr, Nb et Mo; et 0,8<x<1,2 ; 0≤y≤0,6;
- composé **v)** de formule $xLi_2MnO_3$; $(1-x)LiMO_2$ où M est choisi parmi Ni, Co et Mn et x≤1. Selon un mode de réalisation, la matière active positive comprend le composé **i)** avec x=1 ; M' représente au moins un élément choisi dans le groupe constitué par Fe, Ni, Co, Mg et Zn; 0<y<0,5 et z=0.

Selon un mode de réalisation, la matière active positive comprend le composé **ii)** et M est Ni ;

M' est Mn ;
M" est Co et
M‴ est choisi dans le groupe consistant en B, Mg, Al, Si, Ca, Ti, V, Cr, Fe, Cu, Zn, Y, Zr, Nb et Mo ;
avec 0,8≤x≤1,4; 0<y≤0,5; 0≤z≤0,5; 0≤w≤0,2 et x+y+z+w<2,2.

Selon un mode de réalisation, la matière active positive comprend le composé **ii)** et M est Ni ; M' est Co ; M" est Al ; 1≤x≤1,15 ; y>0; z>0; w=0.

L'invention a également pour objet l'utilisation de l'élément électrochimique tel que décrit ci-avant, en stockage, en charge ou en décharge à une température au moins égale à 80°C. L'invention a également pour objet l'utilisation de l'élément électrochimique tel que décrit ci-avant, en stockage, en charge ou en décharge à une température inférieure ou égale à -20°C.

**Brève description des figures**

[Fig. 1] représente la variation de la capacité des éléments A, B et C au cours d'un cyclage à 85°C.
[Fig. 2] représente la variation de la capacité des éléments A, B et C au cours d'un cyclage aux températures de 25°C, 0°C, -20°C et 25°C.
[Fig. 3] représente la variation du pourcentage de transestérification du carbonate de méthyle-éthyle (EMC) en fonction du pourcentage de difluorophosphate de lithium dans un électrolyte comprenant 1 $mol.L^{-1}$ de EMC, 2% en poids de carbonate de vinylène et du difluorophosphate de lithium, après stockage de l'électrolyte pour une durée de deux semaines à une température de 85°C.
[Fig. 4] représente la variation de la capacité des éléments F, G et H au cours d'un cyclage à 25°C et à 60°C.
[Fig. 5] représente la variation de la capacité des éléments F, I et J au cours d'un cyclage à 25°C et à 60°C.
[Fig. 6] représente en haut le spectre de chromatographie en phase gazeuse de la composition d'électrolyte G à la fin du cyclage à 60°C de l'élément la contenant. Le spectre du bas est celui de la composition d'électrolyte H à la fin du cyclage à 60°C de l'élément la contenant.
[Fig. 7] représente en haut le spectre de chromatographie en phase gazeuse de la composition d'électrolyte I à la fin du cyclage à 60°C de l'élément la contenant. Le spectre du bas est celui de la composition d'électrolyte J à la fin du cyclage à 60°C de l'élément la contenant.
[Fig. 8] représente la variation de la capacité des éléments K, L, M, N et O au cours d'un cyclage à 85°C.
[Fig. 9] représente la variation de la capacité des éléments P, Q, R, S et T au cours d'un cyclage à 85°C.
[Fig. 10] représente la variation de la capacité des éléments K, L, M, N et O au cours d'un cyclage aux températures de 20°C, 0°C, -20°C, 25°C et 85°C.
[Fig. 11] représente la variation de la capacité des éléments P, Q, R, S et T au cours d'un cyclage aux températures de 20°C, 0°C, -20°C, 25°C et 85°C.
[Fig. 12] représente la variation de la capacité des éléments A à E au cours d'un cyclage à 85°C.
[Fig. 13] représente la variation de la capacité des éléments A à E au cours d'un cyclage aux températures de 25°C, 0°C, -20°C et 25°C.

**Description des modes de réalisation**

La composition d'électrolyte selon l'invention ainsi que les différents constituants d'un élément électrochimique comprenant la composition d'électrolyte selon l'invention vont être décrits dans ce qui suit.

Composition d'électrolyte :

La composition d'électrolyte comprend au moins un solvant organique dans lequel sont dissous les composés suivants :

- au moins un sel de lithium tétrafluoré ou hexafluoré,
- le sel de bis(fluorosulfonyl)imidure de lithium (LiFSI) de formule :

[Chem. 1]

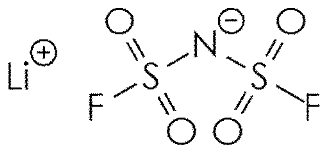

- du carbonate de vinylène (VC) de formule :

[Chem. 2]

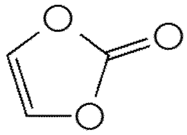

- du sulfate d'éthylène (ESA) de formule :

[Chem. 3]

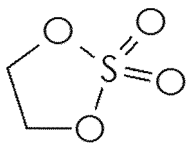

- du difluorophosphate de lithium ($LiPO_2F_2$) de formule :

[Chem. 4]

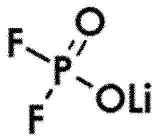

Le difluorophosphate de lithium $LiPO_2F_2$ se dissocie très faiblement en milieu organique et sa présence contribue de manière négligeable à l'augmentation de la quantité d'ions lithium dans l'électrolyte. Il sera considéré dans ce qui suit comme un additif et non comme un sel de l'électrolyte.

Ledit au moins un solvant organique est choisi dans le groupe consistant en les carbonates cycliques ou linéaires, les esters cycliques ou linéaires, les éthers cycliques ou linéaires ou un mélange de ceux-ci.

Des exemples de carbonates cycliques sont le carbonate d'éthylène (EC), le carbonate de propylène (PC) et

le carbonate de butylène (BC). Le carbonate d'éthylène (EC), le carbonate de propylène (PC) et un mélange de ceux-ci sont particulièrement préférés. La composition d'électrolyte peut être exempte de carbonates cycliques autres que EC et PC.

Des exemples de carbonates linéaires sont le carbonate de diméthyle (DMC), le carbonate de diéthyle (DEC), le carbonate de méthyle éthyle (EMC) et le carbonate de méthyle propyle (PMC). Le carbonate de diméthyle (DMC), le carbonate de méthyle éthyle (EMC) et un mélange de ceux-ci sont particulièrement préférés. La composition d'électrolyte peut être exempte de carbonates linéaires autres que DMC et EMC.

Le ou les carbonates cycliques ou linéaires ainsi que le ou les esters cycliques ou linéaires peuvent être substitués par un ou plusieurs atomes d'halogènes, tel que le fluor.

Des exemples d'esters linéaires sont l'acétate d'éthyle, l'acétate de méthyle, l'acétate de propyle, le butyrate d'éthyle, le butyrate de méthyle, le butyrate de propyle, le propionate d'éthyle, le propionate de méthyle et le propionate de propyle.

Des exemples d'esters cycliques sont la gamma-butyrolactone et la gamma-valérolactone.

Des exemples d'éthers linéaires sont le diméthoxyéthane et l'éther de propyle éthyle.

Un exemple d'éther cyclique est le tétrahydrofurane.

Selon un mode de réalisation, la composition d'électrolyte comprend un ou plusieurs carbonates cycliques, un ou plusieurs éthers cycliques et un ou plusieurs éthers linéaires.

Selon un mode de réalisation, la composition d'électrolyte comprend un ou plusieurs carbonates cycliques, un ou plusieurs carbonates linéaires et au moins un ester linéaire.

Selon un mode de réalisation, la composition d'électrolyte comprend un ou plusieurs carbonates cycliques, un ou plusieurs carbonates linéaires et ne comprend pas d'ester linéaire. De préférence, la composition d'électrolyte ne comprend pas d'autres composés solvants que le ou les carbonates cycliques ou linéaires. Dans le cas où les composés solvants sont un mélange de carbonates cycliques et linéaires, le ou les carbonates cycliques peuvent représenter jusqu'à 50 % en volume du volume des carbonates et le ou les carbonates linéaires peuvent représenter au moins 50 % en volume du volume des carbonates. De préférence, le ou les carbonates cycliques représentent de 10 à 40 % en volume du volume des carbonates et le ou les carbonates linéaires représentent de 90 à 60 % du volume des carbonates. Un mélange préféré de solvants organiques est le mélange de EC, PC, EMC et DMC. EC peut représenter de 5 à 15 % en volume du volume du mélange de solvants organiques. PC peut représenter de 15 à 25 % en volume du volume du mélange de solvants organiques. EMC peut représenter de 20 à 30 % en volume du volume du mélange de solvants organiques. DMC peut représenter de 40 à 50 % en volume du volume du mélange de solvants organiques.

La nature du sel de lithium tétrafluoré ou hexafluoré n'est pas particulièrement limitée. On peut citer l'hexafluorophosphate de lithium $LiPF_6$, l'hexafluoroarsénate de lithium $LiAsF_6$, l'hexafluoroantimonate de lithium $LiSbF_6$ et le tétrafluoroborate de lithium $LiBF_4$. On choisira de préférence l'hexafluorophosphate de lithium $LiPF_6$. D'autres sels de lithium en plus du ou des sels de lithium tétrafluoré ou hexafluoré et du sel de bis(fluorosulfonyl)imidure de lithium LiFSI peuvent également être présents dans ledit au moins un solvant organique. De préférence, la composition d'électrolyte ne contient pas d'autres sels de lithium que le ou les sels de lithium tétrafluoré ou hexafluoré et le sel de bis(fluorosulfonyl)imidure de lithium LiFSI. Par exemple, la composition d'électrolyte est exempte de sel de bis(trifluorosulfonyl)imidure de lithium LiTFSI, ce sel présentant une conductivité ionique et un pouvoir passivant des interfaces inférieurs à ceux de LiFSI. De préférence encore, les seuls sels de lithium dans la composition d'électrolyte sont $LiPF_6$ et LiFSI.

La concentration totale en ion lithium dans la composition d'électrolyte est généralement comprise entre 0,1 et 3 $mol.L^{-1}$, de préférence entre 0,5 et 1,5 $mol.L^{-1}$, de préférence encore environ 1 $mol.L^{-1}$.

Les ions lithium issus du sel de lithium tétrafluoré ou hexafluoré représentent généralement jusqu'à 70 % de la quantité totale d'ions lithium présents dans la composition d'électrolyte. Ils peuvent encore représenter de 1 à 70 % de la quantité totale d'ions lithium présents dans la composition d'électrolyte. Ils peuvent encore représenter de 10 à 70 % de la quantité totale d'ions lithium présents dans la composition d'électrolyte.

Les ions lithium issus du sel de bis(fluorosulfonyl)imidure de lithium représentent généralement au moins 30 % de la quantité totale d'ions lithium présents dans la composition d'électrolyte. Ils peuvent encore représenter de 30 à 99 % de la quantité totale d'ions lithium présents dans la composition d'électrolyte. Ils peuvent encore représenter de 30 à 90 % de la quantité totale d'ions lithium présents dans la composition d'électrolyte.

Le carbonate de vinylène, le sulfate d'éthylène et le difluorophosphate de lithium agissent comme additifs contribuant à la stabilisation de la couche de passivation (SEI pour Solid Electrolyte Interface) qui se forme à la surface de l'électrode négative de l'élément électrochimique lors des premiers cycles de charge/décharge de l'élément. Des additifs autres que le carbonate de vinylène, le sulfate d'éthylène et le difluorophosphate de lithium peuvent aussi être ajoutés au mélange.

Dans un mode de réalisation préféré, la composition d'électrolyte ne contient pas d'autres additifs que le carbonate de vinylène, le sulfate d'éthylène et le difluorophosphate de lithium. La quantité d'un additif introduite dans le mélange est mesurée en masse par rapport à la masse de l'ensemble constitué par le ou les sel(s) de lithium tétrafluoré(s) ou hexafluoré(s), le sel de bis(fluorosulfonyl)imidure de lithium LiFSI et ledit au moins un solvant organique.

La masse des deux autres additifs est négligée vis-à-vis de la masse de l'ensemble constitué par le ou les sel(s) de lithium tétrafluoré(s) ou hexafluoré(s), le sel de bis(fluorosulfonyl)imidure de lithium LiFSI et ledit au moins un solvant organique.

Selon un mode de réalisation, le pourcentage massique de carbonate de vinylène représente de 0,1 à 5 %, de préférence de 0,5 à 3 %, de préférence encore de 1 à 2 % en masse de la masse de l'ensemble constitué par le ou les sel(s) de lithium tétrafluoré(s) ou hexafluoré(s), le sel de bis(fluorosulfonyl)imidure de lithium et ledit au moins un solvant organique.

Selon un mode de réalisation, le pourcentage massique de sulfate d'éthylène représente de 0,1 à 5 %, de préférence de 0,5 à 2 %, de préférence encore de 1 à 2 % en masse de la masse de l'ensemble constitué par le ou les sel(s) de lithium tétrafluoré(s) ou hexafluoré(s), le sel de bis(fluorosulfonyl)imidure de lithium et ledit au moins un solvant organique.

Selon l'invention, le pourcentage massique de difluorophosphate de lithium représente de 0,1 à moins de 1%, de préférence de 0,5 à moins de 1%, de la masse de l'ensemble constitué par le ou les sel(s) de lithium tétrafluoré(s) ou hexafluoré(s), le sel de bis(fluorosulfonyl)imidure de lithium et ledit au moins un solvant organique. Selon l'invention, le pourcentage massique de difluorophosphate de lithium représente de 0,1 % à moins de 1 %, ou de 0,1 % à 0,9 % ou de 0,1 % à 0,8 % de la masse de l'ensemble constitué par le ou les sel(s) de lithium tétrafluoré(s) ou hexafluoré(s), le sel de bis(fluorosulfonyl)imidure de lithium et ledit au moins un solvant organique.

Le sulfate d'éthylène peut représenter de 20 à 30 % en masse de la masse de l'ensemble constitué par le sulfate d'éthylène, le carbonate de vinylène et le difluorophosphate de lithium.

Le carbonate de vinylène peut représenter de 40 à 60 % en masse de la masse de l'ensemble constitué par le sulfate d'éthylène, le carbonate de vinylène et le difluorophosphate de lithium.

Le difluorophosphate de lithium peut représenter de 10 à 40 % de la masse de l'ensemble constitué par le sulfate d'éthylène, le carbonate de vinylène et le difluorophosphate de lithium.

Le ratio de la masse de sulfate d'éthylène sur la masse de carbonate de vinylène est inférieur strictement à 1. De préférence, il est inférieur ou égal à 0,5. Un ratio supérieur ou égal à 2 conduit à une dissolution trop rapide de la couche de passivation sur l'électrode négative et à une baisse des performances de l'élément en cyclage.

Le ratio de la masse de difluorophosphate de lithium sur la somme des masses de carbonate de vinylène et de sulfate d'éthylène peut être strictement inférieur à 0,2. Un ratio trop élevé peut conduire à une couche de passivation sur l'électrode négative trop soluble, entrainant une baisse des performances de l'élément en cyclage.

En particulier, la composition d'électrolyte ne contient pas de sulfo-lactone(s) (sultone(s)). La présence de sultone(s) présente un désavantage par rapport au sulfate d'éthylène en ce que la couche de passivation (SEI) à la surface de l'électrode négative est moins conductrice pour les applications à froid que lorsque du sulfate d'éthylène est présent. De plus, pour les applications à chaud, la couche de passivation à la surface de l'électrode négative est plus robuste et moins soluble dans l'électrolyte quand du sulfate d'éthylène est présent que quand une sultone est présente.

Il existe plusieurs modes opératoires pour préparer la composition d'électrolyte. Selon un mode opératoire préféré, on met à disposition ledit au moins un sel de lithium tétrafluoré ou hexafluoré, le sel de bis(fluorosulfonyl)imidure de lithium, le carbonate de vinylène, le sulfate d'éthylène et le difluorophosphate de lithium. Ces composés sont solides. La masse de chaque additif est pesée par rapport à la masse de l'ensemble constitué par le ou les sel(s) de lithium tétrafluoré(s) ou hexafluoré(s), le sel de bis(fluorosulfonyl)imidure de lithium LiFSI et ledit au moins un solvant organique. La masse des deux autres additifs est négligée. On prépare ledit au moins un solvant organique. Ce peut être un mélange de plusieurs solvants organiques. Les solvants sont mélangés selon les proportions volumiques désirées. Les additifs, ledit au moins un sel de lithium tétrafluoré ou hexafluoré et le sel de bis(fluorosulfonyl)imidure de lithium sont ajoutés audit au moins un solvant organique. On ajoute ensuite le carbonate de vinylène audit au moins un solvant organique contenant les additifs. Dans ce mode opératoire, le carbonate de vinylène est introduit en dernier dans l'électrolyte de manière à minimiser le risque de réaction entre le carbonate de vinylène et les autres additifs ou les sels. Le carbonate de vinylène peut néanmoins être introduit en même temps que les autres additifs.

Matière active négative :

La matière active de l'électrode négative (anode) de l'élément électrochimique est de préférence un matériau carboné pouvant être choisi parmi le graphite, le coke, le noir de carbone et le carbone vitreux.

Dans un autre mode de réalisation préféré, la matière active de l'électrode négative contient un composé à base de silicium.

Matière active positive :

La matière active positive de l'électrode positive (cathode) de l'élément électrochimique n'est pas particulièrement limitée. Elle peut être choisie dans le groupe consistant en :

- un composé **i)** de formule $Li_xMn_{1-y-z}M'_yM''_zPO_4$ (LMP), où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0{,}8 \leq x \leq 1{,}2$ ; $0 \leq y \leq 0{,}6$ ; $0 \leq z \leq 0{,}2$;
- un composé **ii)** de formule $Li_xM_{2-x-y-z-w}M'_yM''_zM'''_wO_2$ (LMO2), où M, M', M" et M‴ sont choisis dans le groupe consistant en B, Mg, Al, Si, Ca, Ti, V, Cr, Mn, Fe, Co, Ni, Cu, Zn, Y, Zr, Nb, W et Mo, à la condition que M ou M' ou M" ou M‴ soit choisi parmi Mn, Co, Ni, or Fe ; M, M', M" et M‴ étant différents les uns des autres ; avec $0{,}8 \leq x \leq 1{,}4$ ; $0 \leq y \leq 0{,}5$ ; $0 \leq z \leq 0{,}5$; $0 \leq w \leq 0{,}2$ et $x+y+z+w<2{,}2$ ;
- un composé **iii)** de formule $Li_xMn_{2-y-z}M'_yM''_zO_4$ (LMO), où M' et M" sont choisis dans le groupe consistant en B, Mg, Al, Si, Ca, Ti, V, Cr, Fe, Co, Ni, Cu, Zn, Y, Zr, Nb et Mo;
  M' et M" étant différents l'un de l'autre, et $1 \leq x \leq 1{,}4$ ; $0 \leq y \leq 0{,}6$ ; $0 \leq z \leq 0{,}2$ ;
- un composé **iv)** de formule $Li_xFe_{1-y}M_yPO_4$, où M est choisi dans le groupe consistant en B, Mg, Al, Si, Ca, Ti, V, Cr, Mn, Co, Ni, Cu, Zn, Y, Zr, Nb et Mo; et $0{,}8<x<1{,}2$ ; $0 \leq y \leq 0{,}6$;
- un composé **v)** de formule $xLi_2MnO_3$; (1-x)LiMOz où M est choisi parmi Ni, Co et Mn et $x \leq 1$,

ou un mélange des composés **i)** à **v).**

Un exemple de composé **i)** est $LiMn_{1-y}Fe_yPO_4$. Un exemple préféré est $LiMnPO_4$.

Le composé **ii)** peut avoir pour formule $Li_xM_{2-x-y-z-w}M'_yM''_zM'''_wO_2$, où $1 \leq x \leq 1{,}15$ ; M désigne Ni ; M' désigne Mn ; M" désigne Co et M‴ est choisi dans le groupe consistant en B, Mg, Al, Si, Ca, Ti, V, Cr, Fe, Cu, Zn, Y, Zr, Nb, Mo ou un mélange de ceux-ci ; $2-x-y-z-w>0$ ; $y>0$ ; $z>0$ ; $w \geq 0$.

Le composé **ii)** peut avoir pour formule $LiNi_{1/3}Mn_{1/3}Co_{1/3}O_2$.

Le composé **ii)** peut aussi avoir pour formule $Li_xM_{2-x-y-z-w}M'_yM''_zM'''_wO_2$, où $1 \leq x \leq 1{,}15$ ; M désigne Ni ; M' désigne Co ; M" désigne Al et M‴ est choisi dans le groupe consistant en B, Mg, Si, Ca, Ti, V, Cr, Fe, Cu, Zn, Y, Zr, Nb, Mo ou un mélange de ceux-ci ; $2-x-y-z-w>0$ ; $y>0$ ; $z>0$ ; $w \geq 0$. De préférence, $x=1$ ; $0{,}6 \leq 2-x-y-z \leq 0{,}85$ ; $0{,}10 \leq y \leq 0{,}25$ ; $0{,}05 \leq z \leq 0{,}15$ et $w=0$.

Le composé **ii)** peut aussi être choisi parmi $LiNiO_2$, $LiCoO_2$, $LiMnO_2$, Ni, Co et Mn pouvant être substitués par l'un ou par plusieurs des éléments choisis dans le groupe comprenant Mg, Mn (sauf pour $LiMnO_2$), Al, B, Ti, V, Si, Cr, Fe, Cu, Zn, Zr.

Un exemple de composé **iii)** est $LiMn_2O_4$.

Un exemple de composé **iv)** est $LiFePO_4$.

Un exemple de composé **v)** est $Li_2MnO_3$.

La matière active positive peut être recouverte au moins partiellement par une couche de carbone.

Liant des électrodes positives et négatives :

Les matières actives positive et négative de l'élément électrochimique lithium-ion sont généralement mélangées à un ou plusieurs liant(s), dont la fonction est de lier les particules de matière active entre elles ainsi que de les lier au collecteur de courant sur lequel elles sont déposées.

Le liant peut être choisi parmi la carboxyméthylcellulose (CMC), un copolymère de butadiène - styrène (SBR), le polytétrafluoroéthylène (PTFE), le polyamideimide (PAI), le polyimide (PI), le caoutchouc styrène-butadiène (SBR), l'alcool polyvinylique, le polyfluorure de vinylidène (PVDF) et un mélange de ceux-ci. Ces liants peuvent typiquement être utilisés dans l'électrode positive et/ou l'électrode négative.

Collecteur de courant des électrodes positives et/ou négatives :

Le collecteur de courant des électrodes positives et négatives se présente sous la forme d'un feuillard métallique plein ou perforé. Le feuillard peut être fabriqué à partir de différents matériaux. On peut citer le cuivre ou les alliages de cuivre, l'aluminium ou les alliages d'aluminium, le nickel ou les alliages de nickel, l'acier et l'inox.

Le collecteur de courant de l'électrode positive est généralement un feuillard en aluminium ou un alliage comprenant majoritairement de l'aluminium. Le collecteur de courant de l'électrode négative est généralement un feuillard en cuivre ou un alliage comprenant majoritairement du cuivre. L'épaisseur du feuillard de l'électrode positive peut être différente de celle du feuillard de l'électrode négative. Le feuillard de l'électrode positive ou négative a une épaisseur généralement comprise entre 6 et 30 µm.

Selon un mode de réalisation préféré, le collecteur en aluminium de l'électrode positive est recouvert d'un revêtement conducteur, comme par exemple le noir de carbone, le graphite.

Fabrication de l'électrode négative :

On mélange la matière active négative avec un ou plusieurs liants cités ci-avant et éventuellement un composé

bon conducteur électronique, tel que le noir de carbone. On obtient une encre que l'on dépose sur l'une ou les deux faces du collecteur de courant. Le collecteur de courant enduit d'encre est laminé afin d'ajuster son épaisseur. Une électrode négative est ainsi obtenue.

La composition de l'encre déposée sur l'électrode négative peut être la suivante :

- de 75 à 96 % de matière active négative, de préférence de 80 à 85 % ;
- de 2 à 15 % de liant(s), de préférence 5 % ;
- de 2 à 10 % de composé conducteur électronique, de préférence 7,5 %.

Fabrication de l'électrode positive :

On pratique de la même manière que pour obtenir l'électrode négative mais en partant de matière active positive.

La composition de l'encre déposée sur l'électrode positive peut être la suivante :

- de 75 à 96 % de matière active négative, de préférence de 80 à 90 % ;
- de 2 à 15 % de liant(s), de préférence 10 % ;
- de 2 à 10 % de carbone, de préférence 10 %.

Séparateur :

Le matériau du séparateur peut être choisi parmi les matériaux suivants : une polyoléfine, par exemple le polypropylène, le polyéthylène, un polyester, des fibres de verre liées entre elles par un polymère, le polyimide, le polyamide, le polyaramide, le polyamideimide et la cellulose. Le polyester peut être choisi parmi le téréphtalate de polyéthylène (PET) et le téréphtalate de polybutylène (PBT). Avantageusement, le polyester ou le polypropylène ou le polyéthylène contient ou est revêtu d'un matériau choisi dans le groupe consistant en un oxyde métallique, un carbure, un nitrure, un borure, un siliciure et un sulfure. Ce matériau peut être $SiO_2$ ou $Al_2O_3$.

Préparation du faisceau électrochimique :

On forme un faisceau électrochimique en intercalant un séparateur entre au moins une électrode positive et au moins une électrode négative. On insère le faisceau électrochimique dans le conteneur de l'élément. Le conteneur de l'élément peut être de format parallélépipédique ou cylindrique. Dans ce dernier cas, le faisceau électrochimique est spiralé pour former un montage cylindrique des électrodes.

Remplissage du conteneur :

On remplit le conteneur muni du faisceau électrochimique de la composition d'électrolyte telle que décrite ci-avant.

Un élément selon l'invention comprend typiquement l'association des constituants suivants :

a) au moins une électrode positive dont la matière active est un oxyde lithié de métaux de transition comprenant nickel, manganèse et cobalt ;
b) au moins une électrode négative dont la matière active est du graphite ;
c) une composition d'électrolyte telle que décrite ci-avant ;
d) un séparateur en polypropylène.

La demanderesse a constaté que l'association des deux sels de lithium, c'est-à-dire le sel de lithium tétrafluoré ou hexafluoré et le sel de bis(fluorosulfonyl)imidure de lithium LiFSI avec les trois additifs, c'est-à-dire le carbonate de vinylène, le sulfate d'éthylène et le difluorophosphate de lithium procurait les avantages suivants :

- L'impédance de l'élément électrochimique est réduite.
- L'élément électrochimique peut fonctionner sur une large plage de température, c'est-à-dire allant de -10°C, voire -20°C, jusqu'à une température pouvant aller jusqu'à 80°C, voire 100°C.
- Le risque de décomposition de l'électrolyte est réduit.
- La génération de chaleur par l'élément au cours d'une utilisation en cyclage de celui-ci est réduite.
- L'élément électrochimique peut être soumis à un cyclage comportant des variations importantes de la température ambiante.
- L'élément électrochimique perd moins rapidement de sa capacité lorsqu'il est utilisé dans des conditions de cyclage.

L'invention permet donc de prolonger la durée de vie d'un élément fonctionnant des conditions de cyclage, qu'il s'agisse d'un cyclage à basse ou à haute température.

- La formation de gaz dans le cas d'éléments comportant une anode à base de graphite est réduite.
- La viscosité de la composition d'électrolyte est réduite, ce qui permet d'augmenter la vitesse de remplissage du conteneur et présente un intérêt lorsque l'invention est mise en oeuvre à l'échelle industrielle.

EXEMPLES

Des éléments électrochimiques lithium-ion ont été fabriqués. Ils comprennent une électrode négative dont la matière active est du graphite et une électrode positive dont la matière active a pour formule $LiNi_{1/3}Mn_{1/3}Co_{1/3}O_2$. Le séparateur est un séparateur tricouche PP/PE/PP (PP : polypropylène ; PE : polyéthylène). Les conteneurs des éléments ont été remplis d'un électrolyte dont la composition est référencée de A à T. Le tableau 1 ci-dessous indique les différentes compositions d'électrolyte A à T. Par commodité, les éléments électrochimiques seront désignés dans ce qui suit par référence à la composition d'électrolyte qu'ils contiennent.

[Tableau 1]

| Composition d'électrolyte | Solvant organique ** | $LiPF_6$ ($mol.L^{-1}$) | LiFSI ($mol.L^{-1}$) | VC (%)*** | ESA (%)*** | $LiPO_2F_2$ (%)*** |
|---|---|---|---|---|---|---|
| A* | EC:PC:EMC:DMC 10:20:25:45 | 1,0 | - | 3 | - | - |
| B* | EC:PC:EMC:DMC 10:20:25:45 | 0,7 | 0,3 | 2 | 1 | - |
| C | EC:PC:EMC:DMC 10:20:25:45 | 0,7 | 0,3 | 2 | 1 | 0,5 |
| D * | EC:PC:EMC:DMC 10:20:25:45 | 0,7 | 0,3 | 2 | 1 | 1 |
| E * | EC:PC:EMC:DMC 10:20:25:45 | 0,7 | 0,3 | 2 | 1 | 2 |
| F* | EMC | 1,0 | - | - | - | - |
| G* | EMC | 1,0 | - | 5 | - | - |
| H* | EMC | 1,0 | - | - | 5 | - |
| I* | EMC | 1,0 | - | 2 | - | - |
| J* | EMC | 1,0 | - | 2 | 2 | - |
| K* | EC:PC:EMC:DMC 10:20:25:45 | 1 | - | 1 | - | - |
| L* | EC:PC:EMC:DMC 10:20:25:45 | 0,7 | 0,3 | 1 | - | - |
| M* | EC:PC:EMC:DMC 10:20:25:45 | 0,5 | 0,5 | 1 | - | - |
| N* | EC:PC:EMC:DMC 10:20:25:45 | 0,3 | 0,7 | 1 | - | - |
| O* | EC:PC:EMC:DMC 10:20:25:45 | 0,1 | 0,9 | 1 | - | - |
| P* | EC:PC:EMC:DMC 10:20:25:45 | 1 | - | 1 | 1 | - |
| Q* | EC:PC:EMC:DMC 10:20:25:45 | 0,7 | 0,3 | 1 | 1 | - |
| R* | EC:PC:EMC:DMC | 0,5 | 0,5 | 1 | 1 | - |

(suite)

| Composition d'électrolyte | Solvant organique ** | $LiPF_6$ ($mol.L^{-1}$) | LiFSI ($mol.L^{-1}$) | VC (%)*** | ESA (%)*** | $LiPO_2F_2$ (%)*** |
|---|---|---|---|---|---|---|
| | 10:20:25:45 | | | | | |
| S* | EC:PC:EMC:DMC 10:20:25:45 | 0,3 | 0,7 | 1 | 1 | - |
| T* | EC:PC:EMC:DMC 10:20:25:45 | 0,1 | 0,9 | 1 | 1 | - |
| * Composition d'électrolyte ne faisant pas partie de l'invention<br>** Ratios volumiques<br>*** Pourcentage en masse exprimé par rapport à la somme des masses de solvants organiques, de $LiPF_6$ et de LiFSI si présent | | | | | | |

a) Effet de l'association entre LiFSI, le carbonate de vinylène, le sulfate d'éthylène et le difluorophosphate de lithium par comparaison avec une composition d'électrolyte de référence comprenant $LiPF_6$ et du carbonate de vinylène comme seul additif :

L'élément A comprend un électrolyte de référence comprenant $LiPF_6$ à la concentration de 1 $mol.L^{-1}$ et 3 % en masse de carbonate de vinylène. L'élément B comprend un électrolyte hors de l'invention, qui diffère de celui de l'élément A en ce que 30 % de la quantité molaire de sel de $LiPF_6$ a été remplacé par LiFSI et en ce qu'un tiers de la masse de carbonate de vinylène a été remplacé par du sulfate d'éthylène.

Les éléments A, B et C ont subi un cycle de formation électrochimique à 60°C comprenant une charge au régime de C/10, suivie d'une décharge au régime de C/10, C étant la capacité nominale des éléments. Les éléments A, B et C ont été soumis à un cyclage à une température de 85°C. Chaque cycle comporte une phase de charge au régime de C/3 suivie d'une phase de décharge au régime de C/3 jusqu'à une profondeur de décharge de 100 %. Les éléments sont mis au repos pendant une heure entre chaque cycle. La capacité déchargée par les éléments est mesurée au cours du cyclage. Sa variation est représentée à la figure 1. Le résultat obtenu avec l'élément B montre que le remplacement d'une partie de $LiPF_6$ par LiFSI et le remplacement d'une partie du carbonate de vinylène par du sulfate d'éthylène permet de réduire très significativement la perte de capacité puisqu'après 100 cycles, la capacité déchargée de l'élément B représente 91,7 % de sa capacité nominale. En comparaison, la capacité déchargée de l'élément A après 100 cycles représente moins de 80 % de sa capacité nominale, ce qui n'est pas satisfaisant. De plus, l'ajout de difluorophosphate de lithium permet de réduire davantage la perte de capacité. En effet, l'élément C dont l'électrolyte contient 0,5% de difluorophosphate de lithium présente une capacité déchargée après 100 cycles qui représente 92,1% de sa capacité nominale.

Les éléments A, B et C ont été ensuite soumis à un cyclage comportant des variations importantes de température. Les différentes caractéristiques du cyclage sont indiquées dans le Tableau 2 ci-après.

[Tableau 2]

| Nombre de cycles effectué | Température | Courant de charge ou de décharge |
|---|---|---|
| 1 | 25°C | C/10 |
| 25 | 25°C | C/3 |
| 1 | 0°C | C/10 |
| 25 | 0°C | C/3 |
| 1 | -20°C | C/10 |
| 25 | -20°C | C/3 |
| 1 | 25°C | C/10 |
| 25 | 25°C | C/3 |

La figure 2 représente la variation de la capacité déchargée des éléments A, B et C. Elle montre que quelle que soit la température à laquelle le cyclage est effectué, la capacité déchargée par l'élément C est supérieure à celle

des éléments A et B. L'objectif recherché par la présente invention est donc bien atteint.

En conclusion, les figures 1 et 2 illustrent le bénéfice apporté par l'association des deux sels de lithium, c'est-à-dire le sel de lithium hexafluoré et le sel de bis(fluorosulfonyl)imidure de lithium LiFSI avec les trois additifs, c'est-à-dire le carbonate de vinylène, le sulfate d'éthylène et le difluorophosphate de lithium.

Il a été découvert que la présence de difluorophosphate de lithium permettait de réduire la décomposition chimique de l'électrolyte lorsque l'élément est stocké à haute température. En effet, il est connu que le sel $LiPF_6$ n'est pas stable thermiquement. Il se décompose dès 80°C selon la réaction suivante :

$$LiPF_6 \text{-->} LiF + PF_5$$

De façon surprenante, il a été observé que le difluorophosphate de lithium captait PFs, ce qui avait pour effet de réduire la décomposition de l'électrolyte. Le taux de transestérification d'un carbonate, solvant de l'électrolyte, est un indicateur du degré de décomposition de l'électrolyte. La figure 3 représente le taux de transestérification du carbonate de méthyle éthyle (EMC) en fonction du pourcentage de difluorophosphate de lithium dans l'électrolyte lorsque l'électrolyte est stocké pendant deux semaines à 85°C. On constate que le taux de transestérification diminue lorsque le pourcentage de difluorophosphate de lithium dans l'électrolyte augmente. L'existence de la réaction de transestérification peut aussi être mise en évidence par un test visuel. La coloration rose de l'électrolyte à base de carbonate de méthyle éthyle est d'autant plus prononcée que le taux de décomposition de l'électrolyte est important. Le difluorophosphate de lithium réduit donc la décomposition chimique de l'électrolyte à haute température.

b) Effet synergétique de l'association entre le carbonate de vinylène et le sulfate d'éthylène

Les essais qui suivent démontrent l'existence d'une synergie entre le carbonate de vinylène et le sulfate d'éthylène. Des éléments comprenant les compositions d'électrolyte F, G, H, I et J décrites dans le tableau 1 ci-dessus ont été fabriqués. Ils ont subi un cyclage comprenant les phases suivantes :

- 1 cycle à une température de 60°C au régime de C/10 ;
- 1 cycle à une température de 25°C au régime de C/10 ;
- 15 cycles à une température de 25°C au régime de C/5 ;
- 1 cycle à une température de 60°C au régime de C/10 ;
- 15 cycles à une température de 60°C au régime de C/5.

La figure 4 représente la variation de la capacité déchargée des éléments F, G et H au cours du cyclage. La comparaison entre la courbe de l'élément G et celle de l'élément F montre que l'ajout de 5 % de carbonate de vinylène aide à ralentir la perte de capacité au cours du cyclage. En revanche, la comparaison entre la courbe de l'élément H et celle de l'élément F montre que l'ajout de 5 % de sulfate d'éthylène n'a quasiment aucun effet sur le ralentissement de la perte de capacité de l'élément.

La figure 5 représente la variation de la capacité déchargée des éléments F, I et J au cours du cyclage. La comparaison de la courbe de l'élément I avec celle de l'élément F montre que l'ajout de 2 % de carbonate de vinylène aide à ralentir la perte de capacité au cours du cyclage mais dans une moindre mesure que pour un ajout de 5 % de carbonate de vinylène (élément G). La Demanderesse a constaté de manière surprenante que lorsqu'on ajoute 2 % de sulfate d'éthylène à la composition de l'élément I contenant 2 % de carbonate de vinylène, on observe d'une part une hausse de la capacité déchargée et d'autre part un ralentissement de la perte de capacité de l'élément au cours du cyclage (élément J). Ce résultat est surprenant compte-tenu des résultats obtenus avec l'élément H qui montrent que l'ajout de 5 % de sulfate d'éthylène comme seul additif n'a quasiment aucun effet, ni sur la capacité déchargée, ni sur le ralentissement de la perte de capacité de l'élément. De plus, on remarque que la capacité de l'élément J contenant l'association de 2 % carbonate de vinylène avec 2 % de sulfate d'éthylène présente une capacité déchargée supérieure à celle de l'élément G contenant 5 % de carbonate de vinylène. En effet, la capacité de l'élément J au $33^{ème}$ cycle est voisine de 4200 mAh alors que celle de l'élément G est bien inférieure à 4200 mAh. L'élément J présente donc une capacité plus élevée que l'élément G pour un pourcentage d'additif plus faible (4 % au lieu de 5 %).

La Demanderesse est d'avis que l'association du carbonate de vinylène avec du sulfate d'éthylène permet de stabiliser la couche de passivation à la surface de l'électrode négative. La couche de passivation forme un écran qui empêche l'électrolyte de venir au contact de l'électrode négative et de se décomposer. La couche de passivation étant rendue plus stable, elle protège davantage contre la décomposition de l'électrolyte.

Afin de vérifier cette hypothèse, la Demanderesse a comparé par chromatographie en phase gazeuse les compositions d'électrolyte des éléments G, H, I et J après que ceux-ci aient subi le cyclage des figures 4 et 5. Les spectres obtenus sont représentés aux figures 6 et 7.

Le spectre du bas de la figure 6 est celui de l'élément H dont la composition d'électrolyte comprend 5 % de sulfate d'éthylène comme seul additif. Il montre trois pics attribuables à DMC, EMC, et DEC. Ceci indique qu'au cours du cyclage, EMC qui était le seul solvant organique de la composition d'électrolyte s'est décomposé en DMC et DEC. Les quantités de DMC et de DEC sont semblables à celles obtenues pour une composition d'électrolyte comprenant EMC et $LiPF_6$, sans additif. La présence de sulfate d'éthylène seul ne permet pas d'obtenir une couche de passivation stable.

A titre de comparaison, le spectre du haut de la figure 6 est celui de l'élément G contenant 5 % de carbonate de vinylène comme additif. Ce spectre montre que les pics attribués à DMC et DEC ont quasiment disparu, ce qui indique que l'ajout de 5 % de carbonate de vinylène est suffisant pour stabiliser la couche de passivation et éviter la décomposition de EMC en DMC et DEC. 96,4 % de la quantité initiale de carbonate de vinylène a été consommée par la formation de la couche de passivation.

La comparaison des spectres de la figure 7 démontre l'effet procuré par la présence de sulfate d'éthylène en association avec le carbonate de vinylène dans l'électrolyte. Le spectre du haut de la figure 7 est celui de l'élément I comprenant 2 % de carbonate de vinylène. Il montre trois pics attribués à DMC, EMC et DEC. 100 % de la quantité initiale de carbonate de vinylène a été consommée par la formation de la couche de passivation. C'est pourquoi le pic du carbonate de vinylène n'apparait pas sur le spectre.

Le spectre du bas de la figure 7 est celui de l'élément J comprenant 2 % de carbonate de vinylène et 2 % de sulfate d'éthylène. Il montre une diminution importante de l'intensité des pics attribués à DMC et DEC. Ceci indique donc une diminution de la quantité des produits de décomposition DMC et DEC et confirme que l'association de carbonate de vinylène et de sulfate d'éthylène permet de stabiliser la couche de passivation. Elle permet également de réduire la capacité irréversible de l'élément et d'augmenter le rendement coulombique. 100 % de la quantité initiale de carbonate de vinylène a été consommée par la formation de la couche de passivation.

c) Influence du taux de substitution de $LiPF_6$ par LiFSI :

Des compositions d'électrolyte présentant différents taux de substitution de $LiPF_6$ par LiFSI ont été préparées. Il s'agit des compositions K, L, M, N et O dans lesquelles le taux de substitution molaire de $LiPF_6$ par LiFSI est respectivement de 0 %, 30 %, 50 %, 70 % et 90 %. L'additif utilisé est le carbonate de vinylène en un pourcentage massique de 1 %.

Des éléments contenant les compositions d'électrolyte K à O ont été soumis à un test de cyclage à une température de 85°C. Les charges et décharges ont été effectuées au régime de C/3. La profondeur de décharge est de 100 %. La variation de la capacité déchargée est représentée à la figure 8. Celle-ci montre qu'une défaillance de l'élément K dont l'électrolyte ne contient pas LiFSI intervient dès le 30ème cycle. Les courbes des éléments L à O montrent que la durée de vie de ces éléments est prolongée par rapport à celle de l'élément K, grâce à la substitution de $LiPF_6$ par LiFSI. L'amélioration la plus importante de la durée de vie est obtenue pour l'élément O dans lequel le taux de substitution molaire de $LiPF_6$ par LiFSI est de 90 %. La durée de vie est améliorée d'un facteur d'environ 2,7 par rapport à l'élément K.

Des compositions d'électrolyte présentant différents taux de substitution de $LiPF_6$ par LiFSI ont été préparées. Il s'agit des compositions P, Q, R, S et T dans lesquelles le taux de substitution en mole de $LiPF_6$ par LiFSI est respectivement de 0 %, 30 %, 50 %, 70 % et 90 %. Les additifs utilisés dans ces compositions sont le carbonate de vinylène et le sulfate d'éthylène, en un pourcentage massique de 1 % chacun.

Des éléments contenant les compositions P à T ont été soumis à un test de cyclage à une température de 85°C. Les charges et décharges ont été effectuées au régime de C/3. La profondeur de décharge est de 100 %. La variation de la capacité déchargée par les éléments est représentée à la figure 9. Celle-ci montre que l'association de sulfate d'éthylène avec le carbonate de vinylène en l'absence de LiFSI conduit à une faible durée de vie. En effet, une défaillance de l'élément P dont l'électrolyte ne contient pas LiFSI intervient dès le 30ème cycle. Les courbes des éléments Q à T montrent que la durée de vie de ces éléments est prolongée grâce à la substitution de $LiPF_6$ par LiFSI. L'amélioration la plus importante de la durée de vie est obtenue pour l'élément T dont la composition présente un taux de substitution molaire de $LiPF_6$ par LiFSI de 90 %. La durée de vie est améliorée d'un facteur supérieur à 2,7 par rapport à l'élément P.

Ces résultats montrent que pour un taux de substitution donné de $LiPF_6$ par LiFSI, la durée de vie d'un élément est prolongée lorsque la composition d'électrolyte contient l'association de sulfate d'éthylène avec le carbonate de vinylène en comparaison avec une composition d'électrolyte ne contenant que du carbonate de vinylène comme seul additif.

Les éléments K à T ont ensuite subi un cyclage dont les différentes phases sont indiquées dans le Tableau 3 ci-après :

[Tableau 3]

| Nombre de cycles effectué | Température | Courant de charge ou de décharge |
|---|---|---|
| 1 | 20°C | C/10 |
| 15 | 20°C | C/3 |
| 1 | 0°C | C/10 |
| 15 | 0°C | C/3 |
| 1 | -20°C | C/10 |
| 15 | -20°C | C/3 |
| 1 | 25°C | C/10 |
| 15 | 25°C | C/3 |
| 1 | 85°C | C/10 |
| 15 | 85°C | C/3 |

La figure 10 représente la variation de la capacité déchargée des éléments K à O au cours du cyclage. La figure 11 représente la variation de la capacité déchargée des éléments P à T au cours du cyclage. Les éléments Q à T qui contiennent comme additifs du carbonate de vinylène associé à du sulfate d'éthylène présentent une capacité déchargée supérieure à celle des éléments L à O qui ne contiennent que du carbonate de vinylène comme seul additif. On peut constater également que le bénéfice de l'ajout de sulfate d'éthylène en mélange avec le carbonate de vinylène se manifeste surtout au cours d'une phase de cyclage à haute température, lorsque celle-ci succède à une phase de cyclage à basse température.

d) Influence du pourcentage de difluorophosphate de lithium dans l'électrolyte :

Les éléments A à E ont été soumis à un cyclage à une température de 85°C. Chaque cycle comporte une phase de charge au régime de C/3 suivie d'une phase de décharge au régime de C/3 jusqu'à une profondeur de décharge de 100 %. Les éléments sont mis au repos pendant une heure entre chaque cycle. La capacité déchargée par les éléments A à E est mesurée au cours du cyclage. Sa variation au cours du cyclage est représentée à la figure 12. Les meilleures performances en cyclage sont obtenues pour les éléments C (selon l'invention), D (hors invention) et E (hors invention), dont l'électrolyte contient respectivement 0,5, 1 et 2% de difluorophosphate de lithium. Les éléments D et E contenant 1 et 2% de difluorophosphate de lithium présentent de meilleures performances que l'élément B dont l'électrolyte ne comprend pas de difluorophosphate de lithium. L'élément C (selon l'invention) dont l'électrolyte contient 0,5% de difluorophosphate de lithium présente de meilleures performances que les éléments D et E (tous deux hors invention) dont l'électrolyte contient respectivement 1 et 2% de difluorophosphate de lithium.

La figure 13 représente la variation de la capacité des éléments A à E au cours d'un cyclage aux températures de 25°C, 0°C, -20°C et 25°C. Les meilleures performances sont obtenues pour les éléments C et D dont l'électrolyte contient 0,5 et 1% de difluorophosphate de lithium. L'élément E dont l'électrolyte contient 2% de difluorophosphate de lithium présente de moins bonnes performances que les éléments C et D. Ces performances restent néanmoins satisfaisantes.

**Revendications**

**1.** Composition d'électrolyte comprenant :

- au moins un sel de lithium tétrafluoré ou hexafluoré,
- le sel de bis(fluorosulfonyl)imidure de lithium LiFSI,
- du carbonate de vinylène,
- du sulfate d'éthylène,
- du difluorophosphate de lithium,
- au moins un solvant organique choisi dans le groupe consistant en les carbonates cycliques ou linéaires, les esters cycliques ou linéaires, les éthers cycliques ou linéaires et un mélange de ceux-ci,

le ratio de la masse de sulfate d'éthylène sur la masse de carbonate de vinylène avant addition au solvant étant

strictement inférieur à 1,
le pourcentage massique de difluorophosphate de lithium représentant de 0,1 % à moins de 1% de la masse de l'ensemble constitué par ledit au moins un sel de lithium tétrafluoré ou hexafluoré, le sel de bis(fluorosulfonyl)imidure de lithium et ledit au moins un solvant organique.

**2.** Composition d'électrolyte selon la revendication 1, dans laquelle les ions lithium issus du sel de bis(fluorosulfonyl)imidure de lithium représentent au moins 30 % en mole de la quantité totale d'ions lithium présents dans la composition d'électrolyte.

**3.** Composition d'électrolyte selon l'une des revendications 1 à 2, dans laquelle les ions lithium issus du sel de lithium tétrafluoré ou hexafluoré représentent jusqu'à 70 % en mole de la quantité totale d'ions lithium présents dans la composition d'électrolyte.

**4.** Composition d'électrolyte selon l'une des revendications précédentes, dans laquelle le pourcentage massique de carbonate de vinylène représente de 0,1 à 5 %, de préférence de 0,5 à 2% de la masse de l'ensemble constitué par ledit au moins un sel de lithium tétrafluoré ou hexafluoré, le sel de bis(fluorosulfonyl)imidure de lithium et ledit au moins un solvant organique.

**5.** Composition d'électrolyte selon l'une des revendications précédentes, dans laquelle le pourcentage massique de sulfate d'éthylène représente de 0,1 à 5 %, de préférence de 0,5 à 1 % de la masse de l'ensemble constitué par ledit au moins un sel de lithium tétrafluoré ou hexafluoré, le sel de bis(fluorosulfonyl)imidure de lithium LiFSI et ledit au moins un solvant organique.

**6.** Composition d'électrolyte selon l'une des revendications précédentes, dans laquelle le pourcentage massique de difluorophosphate de lithium représente de 0,5 à moins de 1 % de la masse de l'ensemble constitué par ledit au moins un sel de lithium tétrafluoré ou hexafluoré, le sel de bis(fluorosulfonyl)imidure de lithium et ledit au moins un solvant organique.

**7.** Composition d'électrolyte selon l'une des revendications précédentes, dans laquelle le ratio de la masse de sulfate d'éthylène sur la masse de carbonate de vinylène est inférieur ou égal à 0,5.

**8.** Composition d'électrolyte selon l'une des revendications précédentes, dans laquelle le ratio de la masse de difluorophosphate de lithium sur la somme des masses de carbonate de vinylène et de sulfate d'éthylène est strictement inférieur à 0,2.

**9.** Composition d'électrolyte selon les revendications 7 et 8, dans laquelle le ratio de la masse de sulfate d'éthylène sur la masse de carbonate de vinylène est inférieur ou égal à 0,5 et le ratio de la masse de difluorophosphate de lithium sur la somme des masses de carbonate de vinylène et de sulfate d'éthylène est strictement inférieur à 0,2.

**10.** Elément électrochimique lithium-ion comprenant :

- au moins une électrode négative ;
- au moins une électrode positive ;
- la composition d'électrolyte selon l'une des revendications précédentes.

**11.** Elément électrochimique selon la revendication 10, dans lequel la matière active positive comprend un ou plusieurs des composés i) à v) :

- composé **i)** de formule $Li_xMn_{1-y-z}M'_yM''_zPO_4$, où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0,8 \leq x \leq 1,2$ ; $0 \leq y \leq 0,6$ ; $0 \leq z \leq 0,2$;
- composé **ii)** de formule $Li_xM_{2-x-y-z-w}M'_yM''_zM'''_wO_2$, où M, M', M" et M''' sont choisis dans le groupe consistant en B, Mg, Al, Si, Ca, Ti, V, Cr, Mn, Fe, Co, Ni, Cu, Zn, Y, Zr, Nb et Mo, à la condition que M ou M' ou M" ou M''' soit choisi parmi Mn, Co, Ni, or Fe ;
M, M', M" et M''' étant différents les uns des autres; avec $0,8 \leq x \leq 1,4$ ; $0 \leq y \leq 0,5$ ; $0 \leq z \leq 0,5$; $0 \leq w \leq 0,2$ et $x+y+z+w<2,2$ ;
- composé **iii)** de formule $Li_xMn_{2-y-z}M'_yM''_zO_4$, où M' et M" sont choisis dans le groupe consistant en B, Mg, Al, Si, Ca, Ti, V, Cr, Fe, Co, Ni, Cu, Zn, Y, Zr, Nb et Mo;
M' et M" étant différents l'un de l'autre, et $1 \leq x \leq 1,4$ ; $0 \leq y \leq 0,6$ ; $0 \leq z \leq 0,2$ ;

- composé **iv)** de formule $Li_xFe_{1-y}M_yPO_4$, où M est choisi dans le groupe consistant en B, Mg, Al, Si, Ca, Ti, V, Cr, Mn, Co, Ni, Cu, Zn, Y, Zr, Nb et Mo; et $0,8<x<1,2$ ; $0\leq y\leq 0,6$;
- composé **v)** de formule $xLi_2MnO_3$; (1-x)LiMOz où M est choisi parmi Ni, Co et Mn et $x\leq 1$.

**12.** Elément électrochimique selon la revendication 11, dans lequel la matière active positive comprend le composé **i)** avec x=1 ; M' représente au moins un élément choisi dans le groupe constitué par Fe, Ni, Co, Mg et Zn; 0<y<0,5 et z=0.

**13.** Elément électrochimique selon la revendication 11, dans lequel la matière active positive comprend le composé **ii)** et M est Ni ; M' est Co ; M" est Al ; $1\leq x\leq 1,15$ ; y>0; z>0; w=0.

**14.** Utilisation de l'élément électrochimique selon l'une des revendications 10 à 13, en stockage, en charge ou en décharge à une température au moins égale à 80°C.

**15.** Utilisation de l'élément électrochimique selon l'une des revendications 10 à 13, en stockage, en charge ou en décharge à une température inférieure ou égale à -20°C.

**Patentansprüche**

**1.** Elektrolytzusammensetzung bestehend aus:

- mindestens ein tetrafluoriertes oder hexafluoriertes Lithiumsalz,
- Lithium-bis(fluorsulfonyl)imidsalz LiFSI,
- Vinylencarbonat,
- Ethylensulfat,
- Lithiumdifluorphosphat,
- mindestens ein organisches Lösungsmittel, ausgewählt aus der Gruppe bestehend aus zyklischen oder linearen Carbonaten, zyklischen oder linearen Estern, zyklischen oder linearen Ethern und einer Mischung davon,

wobei das Verhältnis der Masse an Ethylensulfat zur Masse an Vinylencarbonat vor der Zugabe zum Lösungsmittel unbedingt kleiner als 1 sein muss,
wobei der Massenanteil an Lithiumdifluorphosphat von 0.1 bis weniger als 1 % der Gesamtmasse aus dem mindestens einen tetrafluorierten oder hexafluorierten Lithiumsalz, dem Lithium-bis(fluorsulfonyl)imidsalz und dem mindestens ein organisches Lösungsmittel ausmacht,
wobei der Massenanteil von Lithiumdifluorphosphat 0,1 bis weniger als 1 %, vorzugsweise 0,5 bis weniger als 1 %, der Masse der Gesamtheit, bestehend aus dem mindestens einen tetrafluorierten oder hexafluoriertes Lithiumsalz, das Lithium-bis(fluorsulfonyl)imidsalz und das mindestens ein organisches Lösungsmittel.

**2.** Elektrolytzusammensetzung nach Anspruch 1, wobei die aus dem Lithium-bis(fluorsulfonyl)imidsalz resultierenden Lithiumionen mindestens 30 Mol-% der Gesamtmenge der in der Elektrolytzusammensetzung vorhandenen Lithiumionen ausmachen.

**3.** Elektrolytzusammensetzung nach einem der Ansprüche 1 bis 2, bei der die aus dem tetrafluorierten oder hexafluorierten Lithiumsalz resultierenden Lithiumionen bis zu 70 Mol-% der Gesamtmenge der in der Elektrolytzusammensetzung vorhandenen Lithiumionen ausmachen.

**4.** Elektrolytzusammensetzung nach einem der vorangehenden Ansprüche, bei der der Massenprozentsatz von Vinylencarbonat 0,1 bis 5 %, vorzugsweise 0,5 bis 2 % der Masse der Anordnung darstellt, die aus dem mindestens einen tetrafluorierten oder hexafluorierten Lithiumsalz, das Lithiumbis(fluorsulfonyl)imidsalz und das mindestens ein organisches Lösungsmittel besteht.

**5.** Elektrolytzusammensetzung nach einem der vorhergehenden Ansprüche, bei der der Massenanteil von Ethylensulfat 0,1 bis 5 %, vorzugsweise 0,5 bis 1 %, der Masse der aus dem mindestens einen tetrafluorierten oder hexafluorierten Lithiumsalz, Lithiumbis(fluorsulfonyl)imidsalz LiFSI und das mindestens ein organisches Lösungsmittel. bestehenden Gesamtheit ausmacht.

**6.** Elektrolytzusammensetzung nach einem der vorhergehenden Ansprüche, bei der der Massenprozentsatz von Lithiumdifluorphosphat 0,5 bis weniger als 1 % der Masse der Anordnung darstellt, die aus dem mindestens einen tetrafluorierten oder hexafluorierten Lithiumsalz, dem Lithiumbis(fluorsulfonyl)imidsalz und dem mindestens einen organischen Lösungsmittel besteht.

**7.** Elektrolytzusammensetzung nach einem der vorhergehenden Ansprüche, bei der das Verhältnis der Masse an Ethylensulfat zur Masse an Vinylencarbonat kleiner oder gleich 0,5 ist.

**8.** Elektrolytzusammensetzung nach einem der vorhergehenden Ansprüche, bei der das Verhältnis der Masse an Lithiumdifluorphosphat zur Summe der Massen an Vinylencarbonat und Ethylensulfat streng unter 0,2 liegt.

**9.** Elektrolytzusammensetzung nach Anspruch 7 und 8, bei der das Verhältnis der Masse an Ethylensulfat zur Masse an Vinylencarbonat kleiner oder gleich 0,5 ist und das Verhältnis der Masse an Lithiumdifluorphosphat zur Summe der Massen an Vinylencarbonat beträgt und Ethylensulfat liegt streng unter 0,2.

**10.** Elektrochemische Lithium-Ionen-Zelle, bestehend aus:

- mindestens eine negative Elektrode;
- mindestens eine positive Elektrode;
- die Elektrolytzusammensetzung nach einem der vorhergehenden Ansprüche.

**11.** Elektrochemische Zelle nach Anspruch 10, wobei das positive Aktivmaterial eine oder mehrere der Verbindungen i) bis v) umfasst.

- Verbindung **i)** der Formel $Li_xMn_{1-y-z}M'_yM''_zPO_4$, wobei M' und M" voneinander verschieden sind und ausgewählt sind aus der Gruppe bestehend aus B, Mg, Al, Si, Ca, Ti, V, Cr , Fe, Co, Ni, Cu, Zn, Y, Zr, Nb und Mo, mit 0.8 $\leq x \leq 1.2$ ; $0 \leq y \leq 0.6$ ; $0 \leq z \leq 0.2$ ;
- Verbindung **ii)** der Formel $Li_xM_{2-x-y-z-w}M'_yM''_zM'''_wO_2$ wobei M, M', M" und M"' ausgewählt sind aus der Gruppe bestehend aus B, Mg, Al, Si, Ca, Ti, V, Cr, Mn, Fe , Co, Ni, Cu, Zn, Y, Zr, Nb und Mo, mit der Maßgabe, dass M oder M' oder M" oder M'" ausgewählt aus Mn, Co, Ni oder Fe ist,
M, M', M" und M'" voneinander verschieden sind; mit $0.8 \leq x \leq 1.4$; $0 \leq y \leq 0.5$; $0 \leq z \leq 0.5$; $0 \leq w \leq 0.2$ und $x+y+z+w<2.2$;
- Verbindung **iii)** der Formel $Li_xMn_{2-y-z}M'_yM''_zO_4$, wobei M' und M" ausgewählt sind aus der Gruppe bestehend aus B, Mg, Al, Si, Ca, Ti, V, Cr, Fe, Co, Ni, Cu, Zn, Y, Zr, Nb und Mo;
M' und M" voneinander verschieden sind und $1 \leq x \leq 1.4$; $0 \leq y \leq 0.6$; $0 \leq z \leq 0.2$;
- Verbindung **iv**) der Formel $Li_xFe_{1-y}M_yPO_4$,, wobei M ausgewählt ist aus der Gruppe bestehend aus B, Mg, Al, Si, Ca, Ti, V, Cr, Mn, Co, Ni, Cu, Zn, Y, Zr, Nb und $0.8 \leq x \leq 1.2$; $0 \leq y \leq 0.6$;
- Verbindung **v**) der Formel $xLi_2MnO_3$; $(1-x)LiMO_2$, wobei M ausgewählt ist aus Ni, Co und Mn und $x \leq 1$.

**12.** Elektrochemische Zelle nach Anspruch 11, wobei das positive aktive Material die Verbindung umfasst **i)** mit x=1; M' stellt mindestens ein Element dar, ausgewählt aus der Gruppe bestehend aus Fe, Ni, Co, Mg und Zn; $0<y<0,5$ und z=0.

**13.** Elektrochemische Zelle nach Anspruch 11, wobei das positive aktive Material die Verbindung umfasst **ii)** und M ist Ni; M' ist Co; M" ist Al; $1 \leq x \leq 1,15$; y>0; z>0; w=0.

**14.** Verwendung der elektrochemische Zelle nach einem der Ansprüche 10 bis 13 zur Lagerung, zum Laden oder zum Entladen bei einer Temperatur von mindestens 80 °C.

**15.** Verwendung der elektrochemische Zelle nach einem der Ansprüche 10 bis 13 bei der Lagerung, beim Laden oder beim Entladen bei einer Temperatur von weniger als oder gleich -20°C.

## Claims

**1.** An electrolyte composition comprising:

- at least one tetrafluorinated or hexafluorinated lithium salt,
- lithium bis(fluorosulfonyl)imidide LiFSI salt,
- vinylene carbonate,

- ethylene sulfate,
- lithium difluorophosphate,
- at least one organic solvent selected from the group consisting of cyclic or linear carbonates, cyclic or linear esters, cyclic or linear ethers and a mixture thereof,

the ratio of the mass of ethylene sulfate to the mass of vinylene carbonate before addition to the solvent being strictly less than 1,
the mass percentage of lithium difluorophosphate representing from 0.1 to less than 1%, of the mass of the group consisting of said at least one tetrafluorinated or hexafluorinated lithium salt, the lithium bis(fluorosulfonyl)imidide salt and said at least one organic solvent.

**2.** The electrolyte composition as claimed in claim 1, wherein the lithium ions from the lithium bis(fluorosulfonyl)imidide salt represent at least 30% in moles of the total amount of lithium ions present in the electrolyte composition.

**3.** The electrolyte composition as claimed in one of claims 1 to 2, wherein the lithium ions from the tetrafluorinated or hexafluorinated lithium salt represent up to 70% in moles of the total amount of lithium ions present in the electrolyte composition.

**4.** The electrolyte composition as claimed in one of the preceding claims, wherein the mass percentage of vinylene carbonate represents from 0.1 to 5%, preferably from 0.5 to 2%, of the mass of the group consisting of said at least one tetrafluorinated or hexafluorinated lithium salt, the lithium bis(fluorosulfonyl)imidide salt and said at least one organic solvent.

**5.** The electrolyte composition as claimed in one of the preceding claims, wherein the mass percentage of ethylene sulfate represents from 0.1 to 5%, preferably from 0.5 to 1%, of the mass of the group consisting of said at least one tetrafluorinated or hexafluorinated lithium salt, the bis(fluorosulfonyl)imidide lithium salt LiFSI and said at least one organic solvent.

**6.** The electrolyte composition as claimed in one of the preceding claims, wherein the mass percentage of lithium difluorophosphate represents from 0.5 to less than 1%, of the mass of the group consisting of said at least one tetrafluorinated or hexafluorinated lithium salt, the lithium bis(fluorosulfonyl)imidide salt and said at least one organic solvent.

**7.** The electrolyte composition as claimed in one of the preceding claims, wherein the ratio of the mass of ethylene sulfate to the mass of vinylene carbonate is less than or equal to 0.5.

**8.** The electrolyte composition as claimed in one of the preceding claims, wherein the ratio of the mass of lithium difluorophosphate to the sum of the masses of vinylene carbonate and ethylene sulfate is strictly less than 0.2.

**9.** The electrolyte composition as claimed in claims 7 and 8, wherein the ratio of the mass of ethylene sulfate to the mass of vinylene carbonate is less than or equal to 0.5 and the ratio of the mass of lithium difluorophosphate to the sum of the masses of vinylene carbonate and ethylene sulfate is strictly less than 0.2.

**10.** A lithium-ion electrochemical cell comprising:

- at least one negative electrode;
- at least one positive electrode;
- the electrolyte composition as claimed in one of the preceding claims.

**11.** The electrochemical cell as claimed in claim 10, wherein the positive active material comprises one or more of compounds i) to v):

- compound **i)** of formula $Li_xMn_{1-y-z}M'_yM''_zPO_4$, where M' and M" are different from each other and are selected from the group consisting of B, Mg, Al, Si, Ca, Ti, V, Cr, Fe, Co, Ni, Cu, Zn, Y, Zr, Nb and Mo, with $0.8 \leq x \leq 1.2$; $0 \leq y \leq 0.6$; $.0 \leq z \leq 0.2$;
- compound **ii)** of formula $Li_xM_{2-x-y-z-w}M'_yM''_zM'''_wO_2$, where M, M', M" and M‴ are selected from the group consisting of B, Mg, Al, Si, Ca, Ti, V, Cr, Mn, Fe, Co, Ni, Cu, Zn, Y, Zr, Nb and Mo, provided that M or M' or M" or M‴ is selected from Mn, Co, Ni, or Fe;M, M', M" and M‴ being different from each other; with $0.8 \leq x \leq 1.4$;

$0 \leq y \leq 0.5$; $0 \leq z \leq 0.5$; $0 \leq w \leq 0.2$ and $x+y+z+w<2.2$;
- compound **iii)** of formula $Li_xMn_{2-y-z}M'_yM''_zO_4$, where M' and M" are selected from the group consisting of B, Mg, Al, Si, Ca, Ti, V, Cr, Fe, Co, Ni, Cu, Zn, Y, Zr, Nb and Mo;
M' and M" being different from each other, and $1 \leq x \leq 1.4$; $0 \leq y \leq 0.6$; $0 \leq z \leq 0.2$;
- compound **iv)** of formula $Li_xFe_{1-y}M_yPO_4$, where M is selected from the group consisting of B, Mg, Al, Si, Ca, Ti, V, Cr, Mn, Co, Ni, Cu, Zn, Y, Zr, Nb and Mo; and $0.8 \leq x \leq 1.2$; $0 \leq y \leq 0.6$;
- compound **v)** of formula $xLi_2MnO_3$; $(1-x)LiMO_2$ where M is selected from Ni, Co and Mn and $x \leq 1$.

**12.** The electrochemical cell as claimed in claim 11, wherein the positive active material comprises the compound **i)** with x=1; M' represents at least one element selected from the group consisting of Fe, Ni, Co, Mg and Zn; $0<y<0.5$ and z=0.

**13.** The electrochemical cell as claimed in claim 11, wherein the positive active material comprises the compound **ii)** and M is Ni; M' is Co; M" is Al; $1 \leq x \leq 1.15$; $y>0$; $z>0$; w=0.

**14.** Use of the electrochemical cell as claimed in one of claims 10 to 13, in storage, in charge or in discharge at a temperature of at least 80°C.

**15.** Use of the electrochemical cell as claimed in one of claims 10 to 13, in storage, in charge or in discharge at a temperature lower than or equal to -20°C.

[Fig. 1]

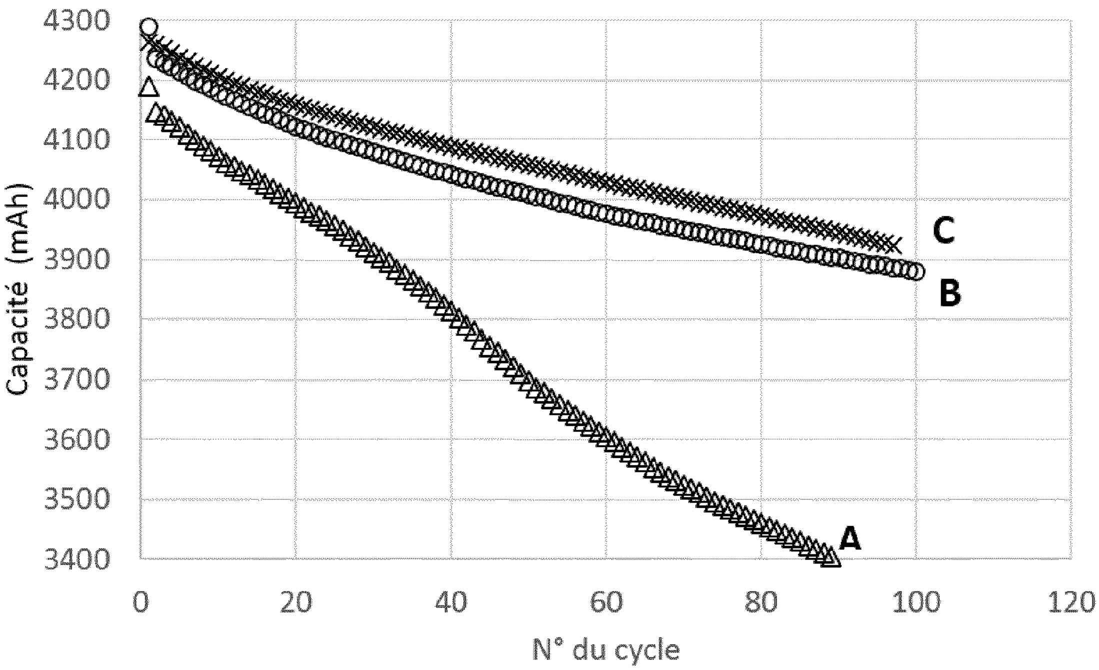
4300
4200
4100
4000
3900
3800
3700
3600
3500
3400
Capacité (mAh)
0
20
40
60
80
100
120
N° du cycle
C
B
A

[Fig. 2]

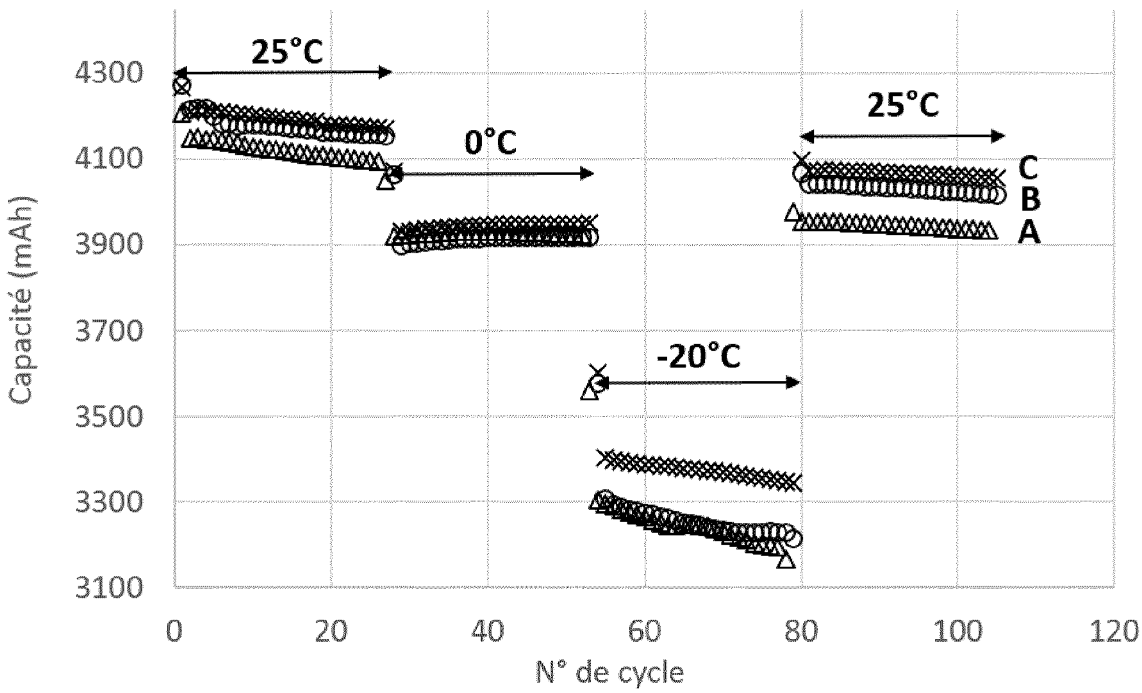
25°C
0°C
-20°C
25°C
4300
4100
3900
3700
3500
3300
3100
Capacité (mAh)
0
20
40
60
80
100
120
N° de cycle
C
B
A

[Fig. 3]

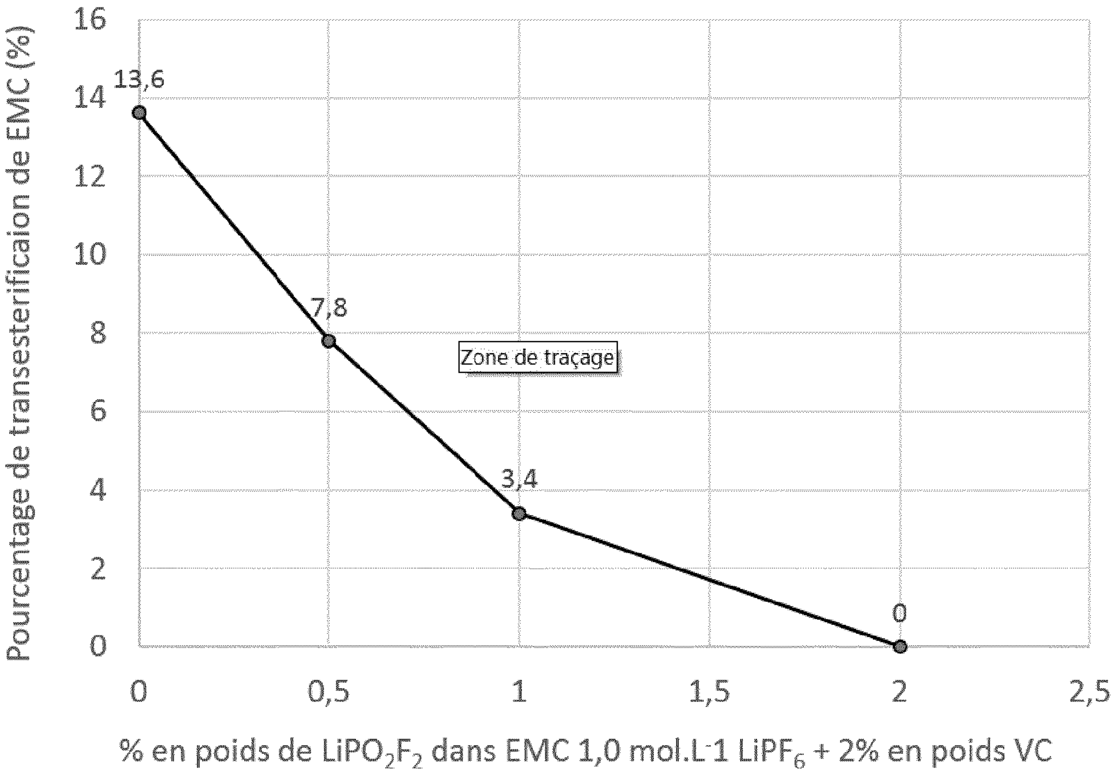
Pourcentage de transesterificaion de EMC (%)
16
14
12
10
8
6
4
2
0
13,6
7,8
3,4
0
Zone de traçage
0
0,5
1
1,5
2
2,5
% en poids de $LiPO_2F_2$ dans EMC 1,0 mol.L-1 $LiPF_6$ + 2% en poids VC

[Fig. 4]

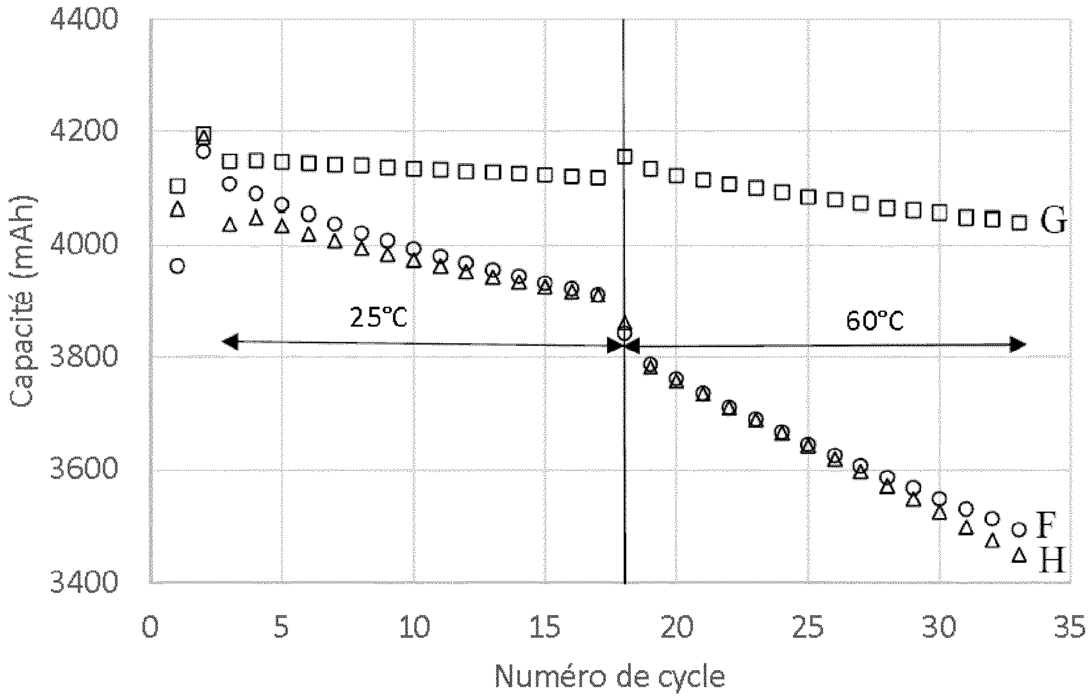
4400
4200
4000
3800
3600
3400
Capacité (mAh)
0
5
10
15
20
25
30
35
Numéro de cycle
25°C
60°C
G
F
H

[Fig. 5]

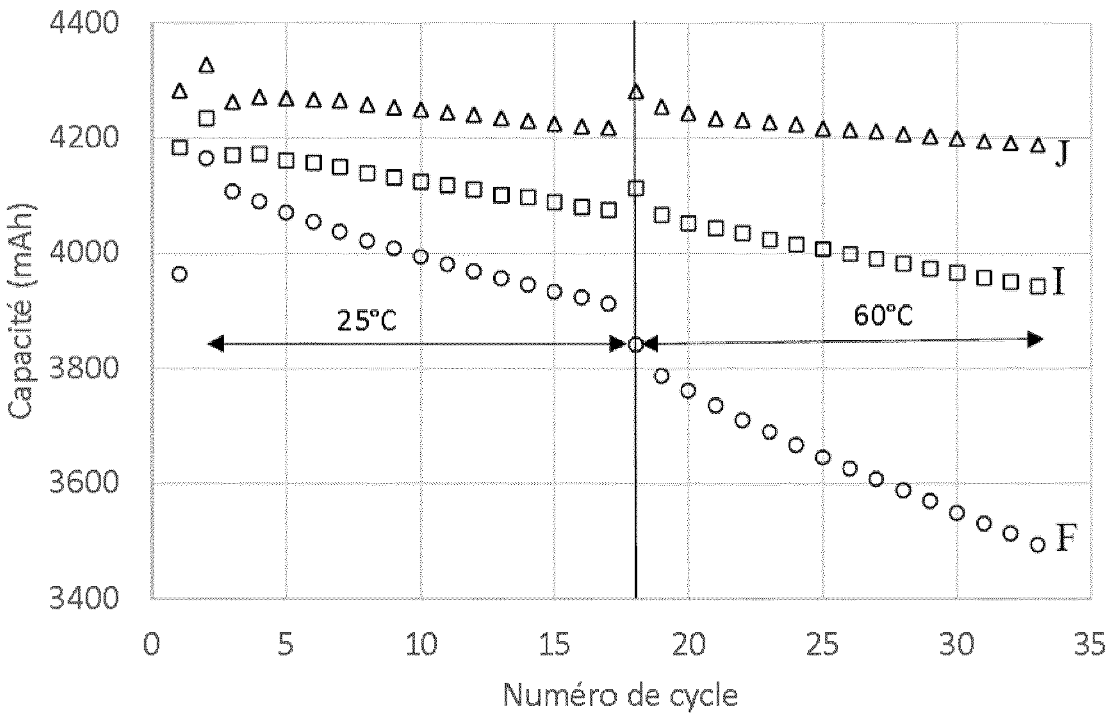
4400
4200
4000
3800
3600
3400
Capacité (mAh)
0
5
10
15
20
25
30
35
Numéro de cycle
25°C
60°C
J
I
F

[Fig. 6]

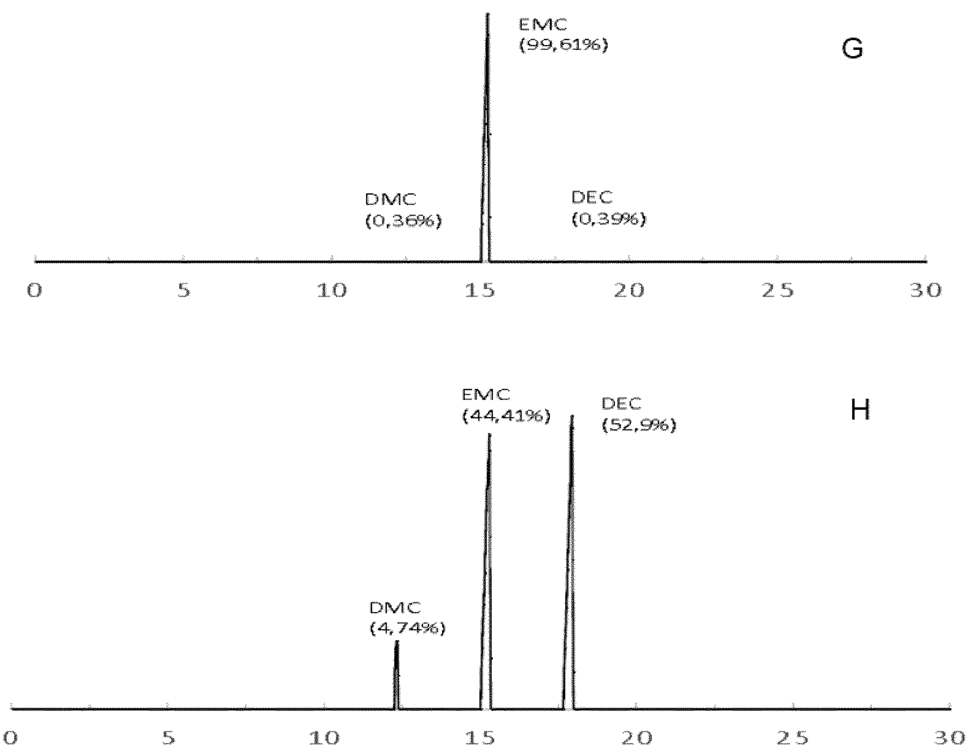
EMC
(99,61%)
G
DMC
(0,36%)
DEC
(0,39%)
0 5 10 15 20 25 30
EMC
(44,41%)
DEC
(52,9%)
H
DMC
(4,74%)
0 5 10 15 20 25 30

[Fig. 7]

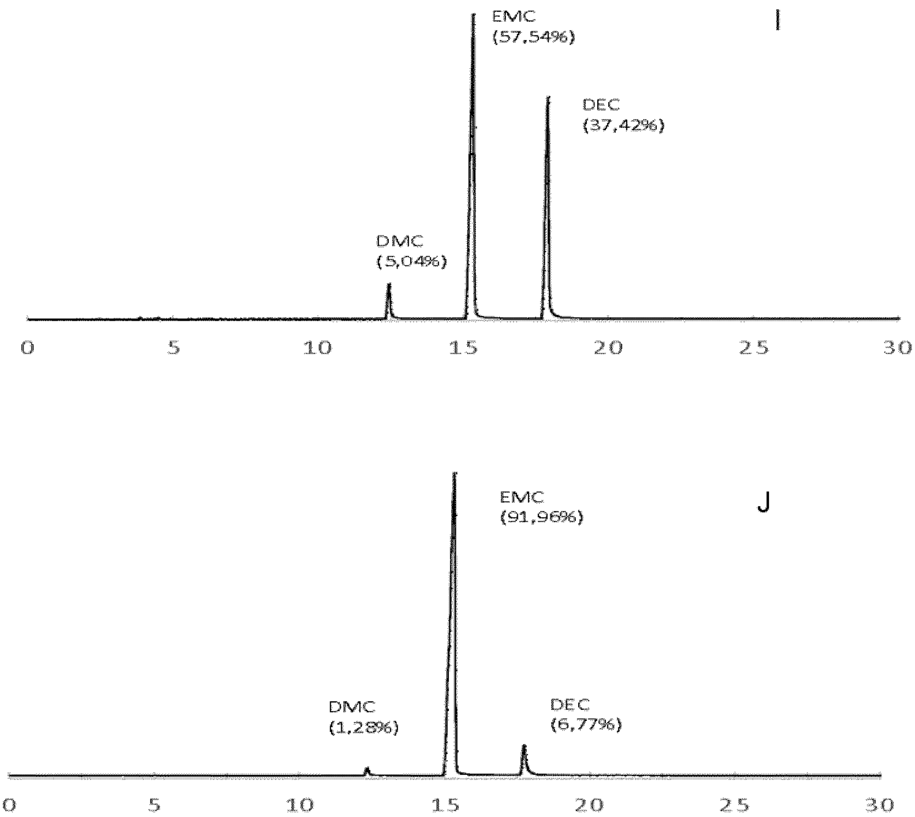
EMC
(57,54%)
I
DEC
(37,42%)
DMC
(5,04%)
0 5 10 15 20 25 30
EMC
(91,96%)
J
DMC
(1,28%)
DEC
(6,77%)
0 5 10 15 20 25 30

[Fig. 8]

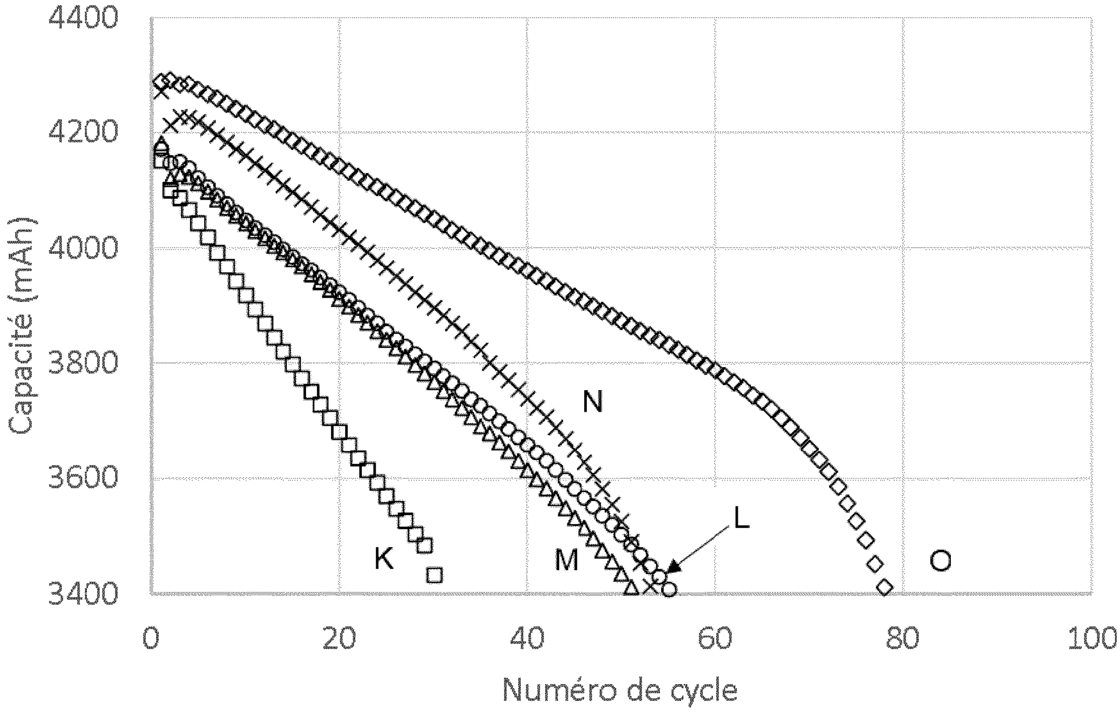
4400
4200
4000
3800
3600
3400
Capacité (mAh)
0
20
40
60
80
100
Numéro de cycle
N
L
K
M
O

[Fig. 9]

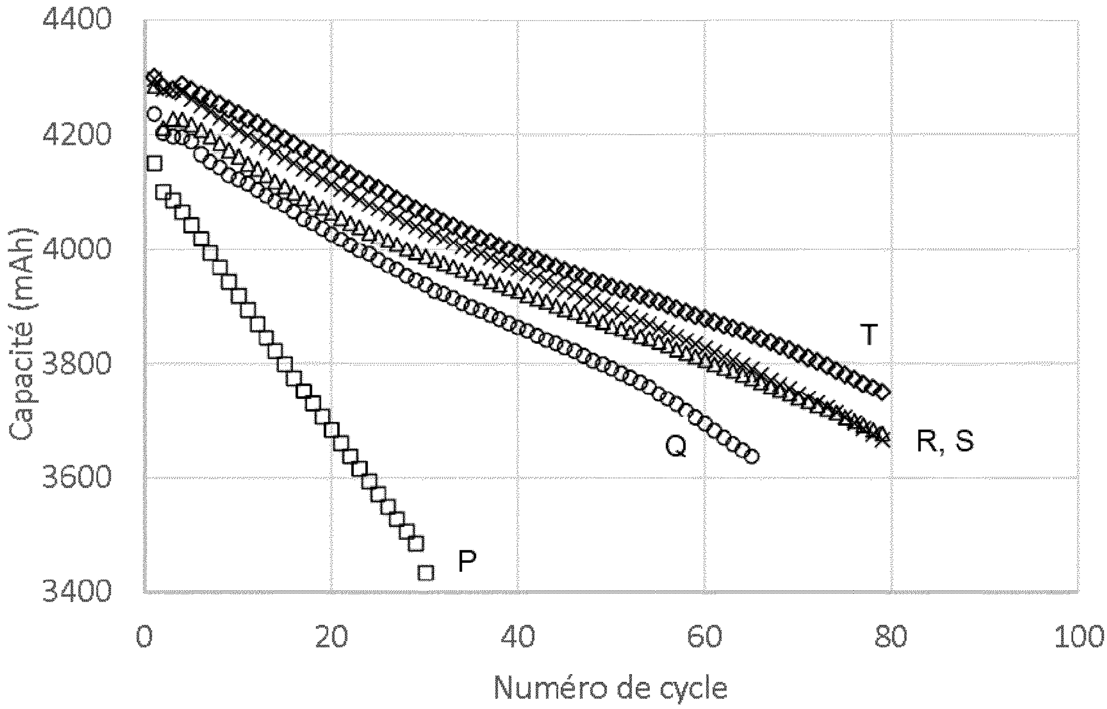
4400
4200
4000
3800
3600
3400
Capacité (mAh)
0
20
40
60
80
100
Numéro de cycle
T
Q
R, S
P

[Fig. 10]

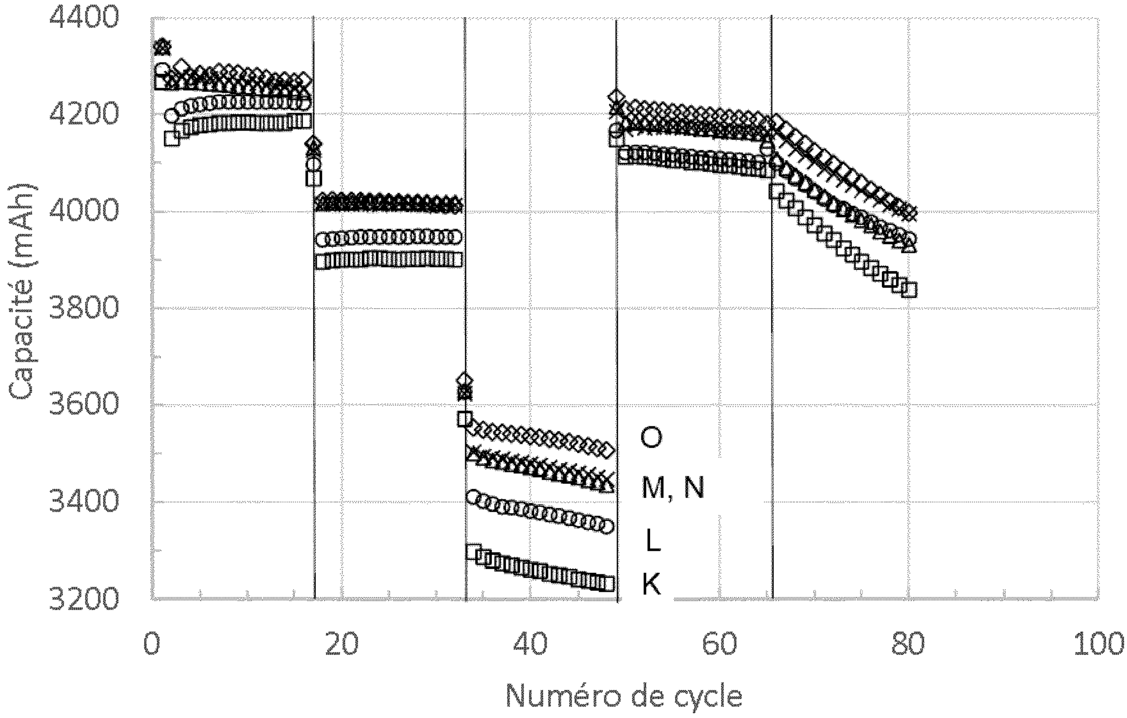
4400
4200
4000
3800
3600
3400
3200
Capacité (mAh)
0
20
40
60
80
100
Numéro de cycle
O
M, N
L
K

[Fig. 11]

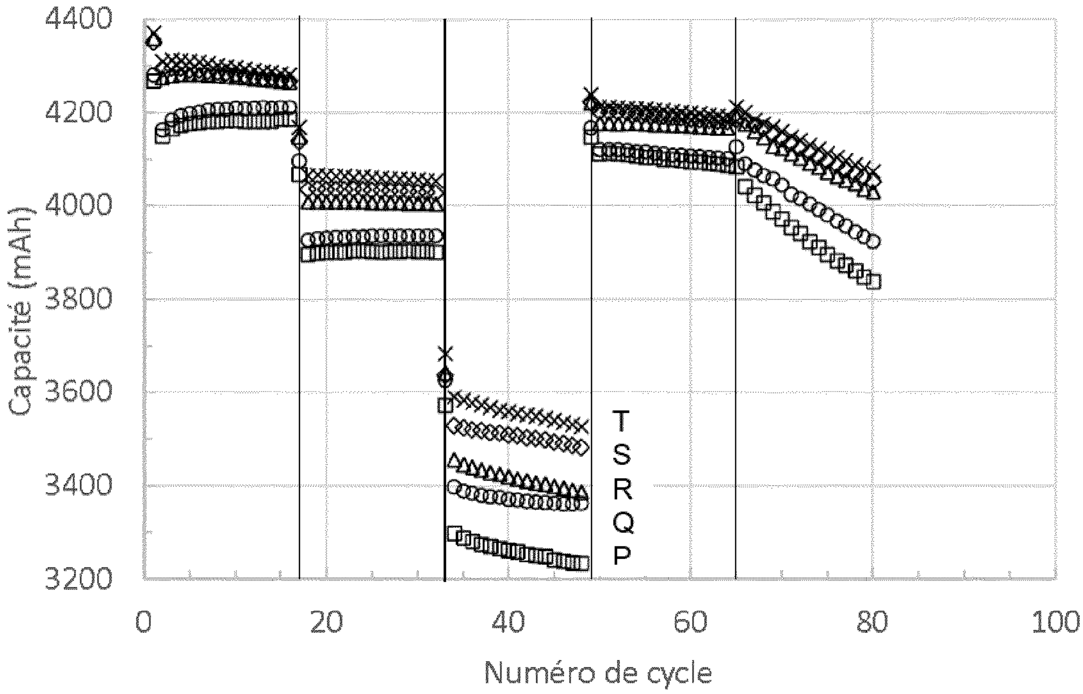
4400
4200
4000
3800
3600
3400
3200
Capacité (mAh)
0
20
40
60
80
100
Numéro de cycle
T
S
R
Q
P

[Fig. 12]

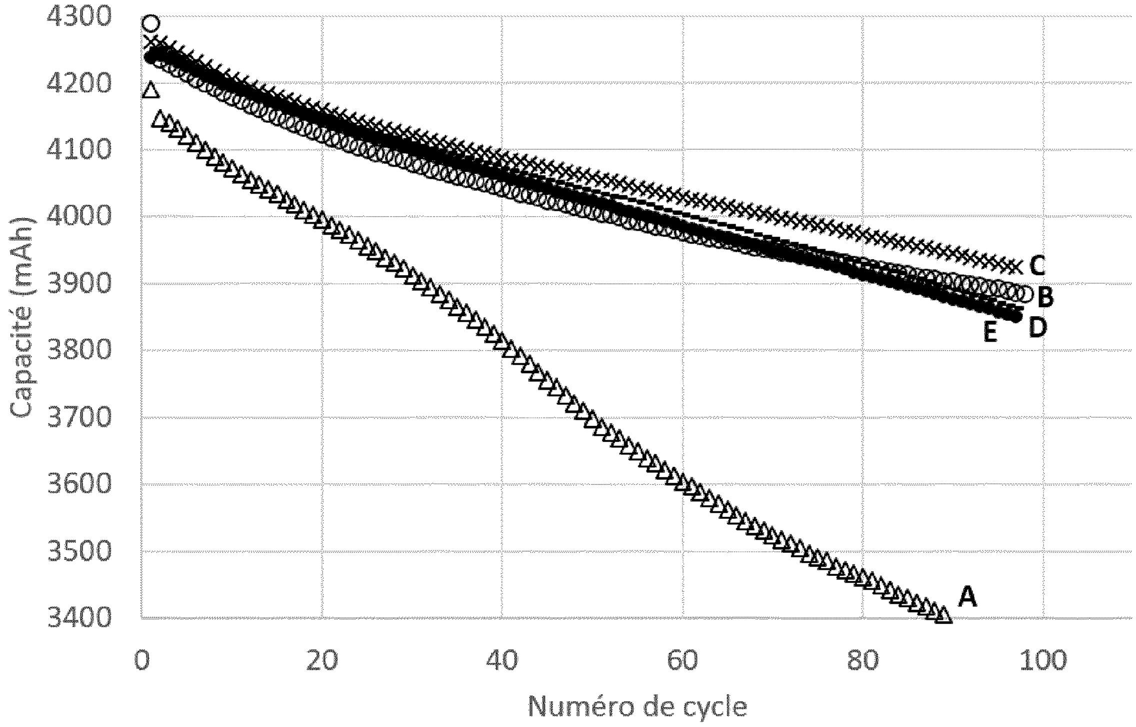
4300
4200
4100
4000
3900
3800
3700
3600
3500
3400
Capacité (mAh)
0
20
40
60
80
100
Numéro de cycle
A
B
C
D
E

[Fig. 13]

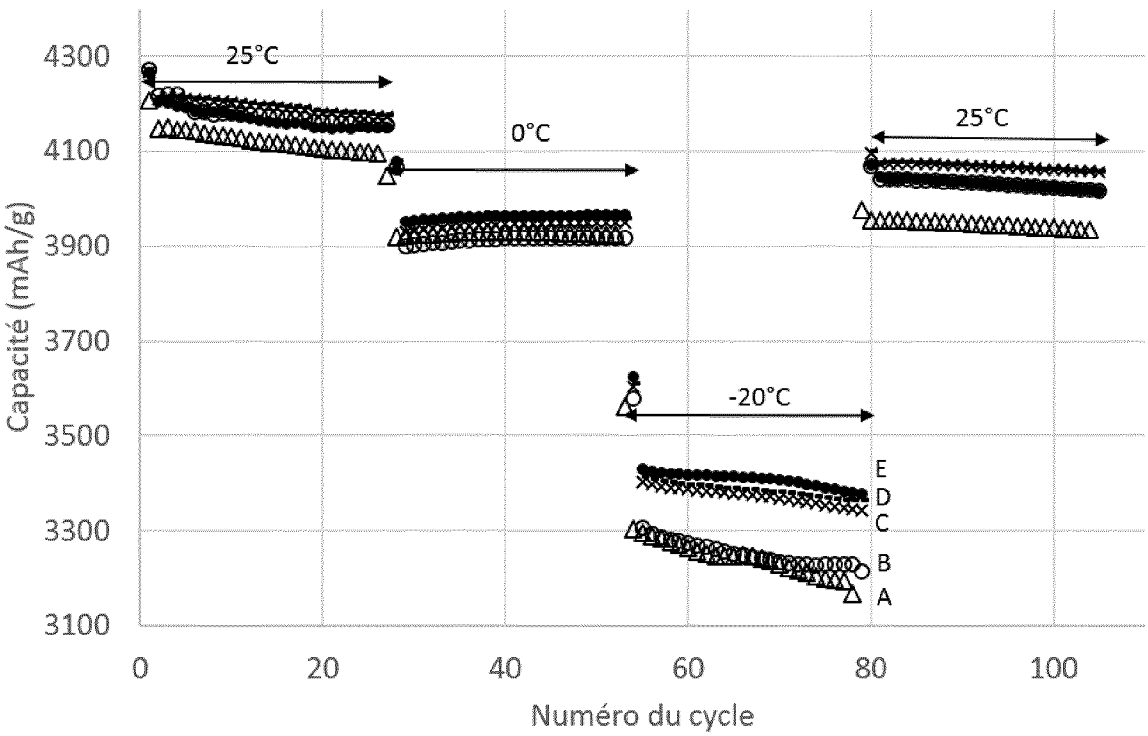
4300
4100
3900
3700
3500
3300
3100
Capacité (mAh/g)
0
20
40
60
80
100
Numéro du cycle
25°C
0°C
-20°C
25°C
E
D
C
B
A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CN 106099171
- CN 108539267
- CN 108054431
- CN 107706455
- CN 106252716 A